# EUROPEAN PATENT APPLICATION

(11) **EP 3 753 680 A1**
(43) Date of publication of application: **23.12.2020**
(21) Application number: 18911160.2
(22) Date of filing: 20.12.2018
(51) Int. Cl.: B25G 1/04, A47L 13/42, F16B 7/12, F16B 7/20

(54) **ARM FOR CLEANING TOOL**

(30) Priority: 20.03.2018 JP 2018053547
(71) Applicant: Unicharm Corporation, Shikokuchuo-shi, Ehime 799-0111 (JP)
(72) Inventor: SUDA, Tomokazu, Kanonji-shi, Kagawa 769-1602 (JP); KENMOCHI, Yasuhiko, Kanonji-shi, Kagawa 769-1602 (JP); MANABE, Yuuka, Kanonji-shi, Kagawa 769-1602 (JP); YAMAMICHI, Ayuka, Kanonji-shi, Kagawa 769-1602 (JP)
(74) Representative: Staeger & Sperling Partnerschaftsgesellschaft mbB
(86) International application number: PCT/JP2018/047097
(87) International publication number: WO 2019/181120

(57) **Abstract**

The purpose of the present invention is to provide an arm comprising an extension locking mechanism that can be smoothly engaged and disengaged. This arm (5) for a cleaning tool (1) is configured so as to be extendable in the axial (AL1) direction and comprises at least: a first cylindrical body (201) that has a hollow section (202) and comprises an inner surface (245); and a second cylindrical body (203) that is inserted inside the hollow section. The first cylindrical body comprises first engagement sections (603, 604) configured so as to be bendable towards the outside, at a first tip (211) and the inner surface. The second cylindrical body comprises an engagement member (227) comprising: a coupling section (301) that couples with the second cylindrical body at a second base end (213); a cylindrical section (303) arranged inside the hollow section and having an outer surface (304); and second engagement sections (329, 330) arranged on the outer surface and configured so as to engage with the first engagement sections.

## Description

### FIELD

The present invention relates to an arm portion for a cleaning tool.

### BACKGROUND

A cleaning tool in which a disposable cleaning body is attached to a cleaning body attachment portion, whereby performs wipe cleaning of dust, etc., is commercially available. As such a cleaning tool, for example, one which includes an extendable and shrinkable arm portion that has a grip portion, and a cleaning body attachment portion is known.

For example, Patent Literature 1 discloses an extendable and shrinkable stick-like tool in which a plurality of cylindrical bodies are fit in an extendable and shrinkable manner, wherein a slider which is provided at a tip end portion of a small diameter cylindrical body is inserted into an inner diameter portion of a large diameter cylindrical body in a slidable manner, the slider includes a bottom portion which is fixed to the small diameter cylindrical body and a skirt portion which extends from an outer edge of the bottom portion into a short cylinder, a narrow width groove which is provided along an axis direction of an outer peripheral portion of the bottom portion of the slider and a wide width groove which is provided along an axis direction of the skirt portion are engaged to a guide rib which extends along an axis direction of the inner diameter portion of the large diameter cylindrical body, whereby a rotation between the cylindrical bodies which are mutually extendable and shrinkable can be locked, and protrusion portions which are provided in a circumferential direction at an outer periphery of the skirt portion of the slider are engaged to a lock groove on an extending side and a lock groove on a shrinking side which are provided in the inner diameter portion closer to both ends of the large diameter cylindrical body, whereby an extending and shrinking length between the cylindrical bodies which are mutually extendable and shrinkable can be locked.

In the extendable and shrinkable stick-like tool described in Patent Literature 1, the protrusion portions which are arranged in the outer periphery of the skirt portion of the slider are engaged to the lock groove on the extending side and the lock groove on the shrinking side which are provided in the inner diameter portion of the cylindrical body, and the protrusion portions further slides on the inner diameter portion of the cylindrical body as shown in FIG. 6 of Patent Literature 1.

### [CITATION LIST]

### [PATENT LITERATURE]

[PTL 1] Japanese Unexamined Patent Publication No. H10 - 235574

### SUMMARY

### [TECHNICAL PROBLEM]

In the extendable and shrinkable stick-like tool described in Patent Literature 1, the protrusion portions which are arranged in the outer periphery of the skirt portion of the slider are essential configurational elements for each of the lock mechanism at shrinkage, the sliding mechanism, and the lock mechanism at extension, which are defined in the present description. However, in the extendable and shrinkable stick-like tool described in Patent Literature 1, at the protrusion portions and the lock groove on the extending side which are necessary for operating the lock mechanism at extension, although the protrusion portions can deform elastically in accordance with the skirt portion being bent to the inner side, the lock groove on the extending side which is arranged at the inner diameter portion of the large diameter cylindrical body cannot deform elastically. Accordingly, in the extendable and shrinkable stick-like tool described in Patent Literature 1, it is difficult to engage the protrusion portions and the lock groove on the extending side smoothly, and it is difficult to disengage the protrusion portions and the lock groove on the extending side in a state of being engaged smoothly.

Further, in the extendable and shrinkable stick-like tool described in Patent Literature 1, in a case in which the lock mechanism at extension is not operating, as shown in FIG. 6 of Patent Literature 1, it is necessary for the skirt portion itself of the slider to deform elastically to the inner side and keep being deformed. Accordingly, in the extendable and shrinkable stick-like tool described in Patent Literature 1, there is a tendency that the repulsive force of the skirt portion to the outer side weakens as being used. As a result, in the extendable and shrinkable stick-like tool described in Patent Literature 1, there is a tendency that it becomes more difficult to demonstrate the lock function at extension by usage.

Accordingly, the object of the present disclosure is to provide an arm portion which includes a lock mechanism at extension that can be engaged and disengaged smoothly.

### [SOLUTION TO PROBLEM]

The present inventors found out that an arm portion for a cleaning tool, which includes a cleaning body attachment portion that has a flexible direction, wherein the arm portion includes an axis line and a circumferential direction, and further includes a base end and a tip end, the arm portion includes at least a first cylindrical body which has a hollow portion and an inner surface, and a second cylindrical body which is inserted into the hollow portion, and is configured so as to be extendable and shrinkable in a direction of the axis line, the first cylindrical body includes a first base end portion which is close to the base end and a first tip end portion which is close to the tip end, the second cylindrical body includes a second base end portion which is close to the base end and a second tip end portion which is close to the tip end, the first cylindrical body includes a first engagement portion which is configured so as to deform elastically to an outer side at the first tip end portion in the inner surface, and the second cylindrical body includes an engagement member which has a connection portion that is connected to the second cylindrical body at the second base end portion, a cylindrical portion that is arranged inside the hollow portion and has an outer surface, and a second engagement portion that is arranged in the outer surface, is capable of deforming elastically to an inner side and is configured so as to engage with the first engagement portion is the solution to the problem.

### [ADVANTAGEOUS EFFECTS OF INVENTION]

The arm portion of the present disclosure includes a lock mechanism at extension which can be engaged and disengaged smoothly.

### BRIEF DESCRIPTION OF DRAWINGS

[FIG. 1] FIG. 1 is a perspective view of the cleaning tool 1 which includes the first arm portion 5 according to the first embodiment, in the cleaning state.
[FIG. 2] FIG. 2 is a right side surface view of the cleaning tool 1 in the stored state.
[FIG. 3] FIG. 3 is a view for explaining the first arm portion 5 in the shrinkage state.
[FIG. 4] FIG. 4 is a view for explaining the first arm portion 5 in the extension state.
[FIG. 5] FIG. 5 is a view for explaining the lock member 225.
[FIG. 6] FIG. 6 is a view for explaining the second engagement member 227.
[FIG. 7] FIG. 7 is a view for explaining the first bush member 601.
[FIG. 8] FIG. 8 is a view for explaining the relationship between the second engagement member 227 and the first bush member 601.
[FIG. 9] FIG. 9 is a view for explaining the third engagement member 229.
[FIG. 10] FIG. 10 is a view for explaining the second bush member 621.
[FIG. 11] FIG. 11 is a view for explaining the fourth engagement member 231.
[FIG. 12] FIG. 12 is a view for explaining the third bush member 641.

### DESCRIPTION OF EMBODIMENTS

### [Explanation of the terms]

### · "the shrinkage state" and "the extension state"

In the present description, "the shrinkage state" and "the extension state" in relation to the members which configure the cleaning tool (for example, the first arm portion and the second arm portion) are terms which are used for extendable and shrinkable members.

Specifically, "the shrinkage state" means the state in which an extendable and shrinkable member is shrunk in the greatest degree, and "the extension state" means the state in which an extendable and shrinkable member is extended in the greatest degree.

Further, the shrinkage state is related to the later described stored state of a cleaning tool, and the extension state is related to the later described cleaning state of a cleaning tool.

### · "the stored state" and "the cleaning state" in relation to a cleaning tool

In the present description, "the stored state" in relation to a cleaning tool means the state which is adopted when storing a cleaning tool. Generally, a cleaning tool in the stored state is in a state in which extendable portions of the cleaning tool are entirely shrunk (are in the stored state), and in a case in which the cleaning tool includes a rotation portion, the later described arm angle is made to be the minimum.

In the present description, "the cleaning state" in relation to a cleaning tool means the state which is adopted when using a cleaning tool. Generally, a cleaning tool in the cleaning state is in a state where in a case in which the cleaning tool includes a rotation portion, the later described arm angle is changed in accordance with the portion to be cleaned, and the extendable portion of the cleaning tool is extended in accordance with the portion to be cleaned (in an extendable and shrinkable member, such a state includes the extension state). Incidentally, in a case in which a portion close to the user is cleaned, the cleaning tool may be used without extending the extendable portion of the cleaning tool.

### · "the front surface", "the side surface", and "the back surface" in relation to a cleaning tool

In the present description, in a state in which the user holds the cleaning tool so that the cleaning body attachment portion (the cleaning body) faces the front side of the user, the surface of the cleaning tool which faces the user's side (the surface on the closer side) is referred to as the front surface, and the surface of the cleaning tool on the opposite side of the surface which faces the user's side (the surface on the farther side) is referred to as the back surface. The side surfaces mean the two surfaces between the front surface and the back surface.

In a case in which the cleaning tool includes a rotation portion, the above-mentioned "the front surface", "the side surface", and "the back surface" are applied to a state in which the cleaning tool is arranged substantially linearly, and preferably to a state in which the arm angle θ is set to 180 degrees.

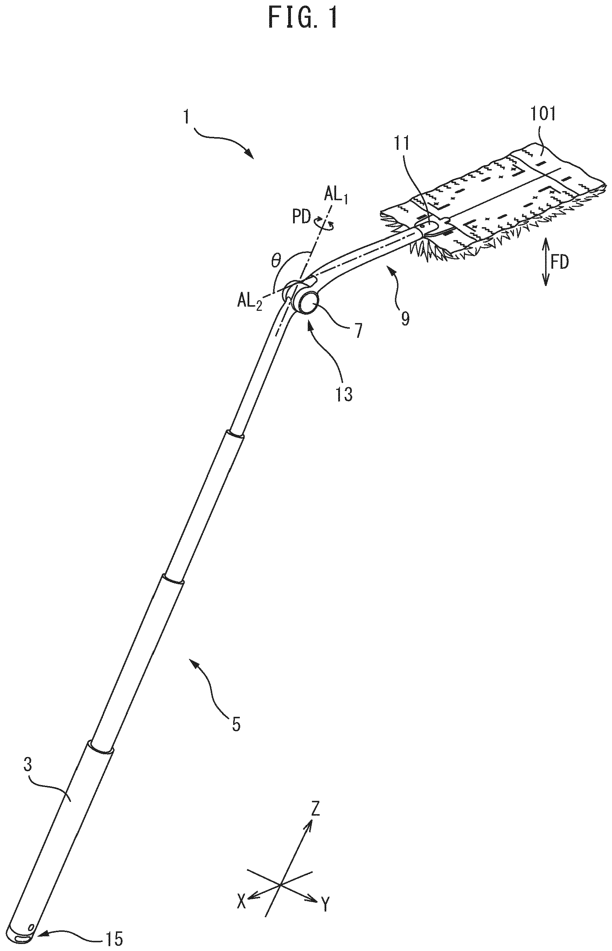

In the cleaning tool 1 of the first embodiment, as shown in FIG. 1, the X axis, the Y axis, and the Z axis which are mutually orthogonal to each other are shown, and the closer side of the X axis is the front surface of the cleaning tool 1, the farther side of the X axis is the back surface of the cleaning tool 1, the right side with facing the Y axis is the right side surface of the cleaning tool 1, and the left side with facing the Y axis is the left side surface of the cleaning tool 1.

### · "the inner side" and "the outer side"

In the present description, "the inner side" and "the outer side" means in an object which has an axis line, the direction which becomes closer to the axis line, and the direction which becomes farther to the axis line, respectively. Incidentally, each of the inner side and the outer side may be a direction which is orthogonal to the axis line, and may be a direction which crosses the axis line.

### · "the flexible direction" in relation to the cleaning body attachment portion

In the present description, "the flexible direction" of the cleaning body attachment portion means the direction to which it is easiest for the cleaning body attachment portion to be bent.

In a case in which the surface to be cleaned is dirty, etc., the cleaning body attachment portion may be used so as to be pressed onto the surface to be cleaned, and thus the cleaning body attachment portion is configured so as to deform elastically to some extent in a direction orthogonal to the surface to be cleaned.

### · "the flexible direction" which is referred to in relation to the arm portion

When the cleaning body attachment portion is bent in the flexible direction, it is easier for the arm portion to rattle in the predetermined direction orthogonal to the axis line of the arm portion.

In the present description, in a case in which the cleaning tool does not include a rotation portion, the flexible direction of the above-mentioned cleaning body attachment portion is applied as it is to "the flexible direction" which is referred to in relation to the rattling of the arm portion. This is because the predetermined direction in which it is easy for the arm portion to rattle is the same as the flexible direction.

Further, in the present description, in a case in which the cleaning tool includes a rotation portion between the arm portion that includes a grip portion, and the cleaning body attachment portion, "the flexible direction" which is referred to in relation to the rattling of the arm portion is the same as the flexible direction of the cleaning body attachment portion in a state in which the arm angle θ of the rotation portion is set to 180 degrees. Incidentally, an arm angle of 180 degrees is merely for the purpose of defining the flexible direction which is referred to in relation to the arm portion, and whether the rotation portion can actually have an arm angle θ of 180 degrees or not is irrelevant to such purpose.

In a case in which the cleaning tool is used in a state in which the arm angle of the rotation portion may take any angle, when the cleaning body attachment portion (and the cleaning body) is pressed onto the surface to be cleaned in the flexible direction, the cleaning body attachment portion, and the cleaning body receive a repulsive force in the direction opposite to the flexible direction from the surface to be cleaned. At this time, the arm portion which includes the grip portion is to receive an axis line direction component force which is a component force of the repulsive force in the direction of the axis line of the arm portion, and an orthogonal direction component force which is a component force of the repulsive force in the direction orthogonal to the axis line of the arm portion. The axis line direction component force acts so as to make the arm portion extend and shrink, and the orthogonal direction component force acts so as to make the arm portion rattle. Since the above-mentioned orthogonal direction component force is the same as the flexible direction of the cleaning body attachment portion in a state in which the arm angle θ of the rotation portion is set to 180 degrees, "the flexible direction" which is referred to in relation to the arm portion in a case in which the cleaning tool includes a rotation portion between the arm portion that includes a grip portion, and the cleaning body attachment portion, is defined as mentioned above.

### · "the outer surface cross sectional shape" and "the inner surface cross sectional shape"

In the present description, "the outer surface cross sectional shape" is a term which is used for an object which has an axis line and an outer shape, and "the outer surface cross sectional shape" means the shape at a portion in which the plane orthogonal to the axis line and the outer shape of the object cross with each other. Incidentally, in a case in which the object is a void, the above-mentioned outer surface cross sectional shape is used for, for example, a hollow portion, etc.

In the present description, "the inner surface cross sectional shape" is a term which is used for an object which has an axis line and an inner shape (a void), and "the inner surface cross sectional shape" means the shape at a portion in which the plane orthogonal to the axis line and the inner shape of the object cross with each other.

### · "the sliding function", "the lock function at shrinkage", and "the lock function at extension"

In the present description, the function of making adjacent cylindrical bodies of the arm portion, for example, the first cylindrical body and the second cylindrical body, slide, is referred to as "the sliding function". Further, the function of locking the adjacent cylindrical bodies, for example, the first cylindrical body and the second cylindrical body, in the shrinkage state, is referred to as "the lock function at shrinkage", and the function of locking the adjacent cylindrical bodies, for example, the first cylindrical body and the second cylindrical body, in the extension state, is referred to as "the lock function at extension".

Incidentally, the mechanisms of demonstrating "the sliding function", "the lock function at shrinkage", and "the lock function at extension" are referred to as "the sliding mechanism", "the lock mechanism at shrinkage", and "lock mechanism at extension", respectively.

### · "the ordinal numbers"

In the present description, members which are connected to the first arm portion, the second arm portion, the third arm portion, and the fourth arm portion, may be given with ordinal numbers of "the first", "the second", "the third", and "the fourth". Accordingly, for a member which does not include the first arm portion but includes the second arm portion, a member which does not include the ordinal number of "the first" is present (for example, the engagement member".

The present disclosure relates to the following aspects.

### [Aspect 1]

An arm portion for a cleaning tool, which includes a cleaning body attachment portion that has a flexible direction, wherein
the arm portion includes an axis line and a circumferential direction, and further includes a base end and a tip end,
the arm portion includes at least a first cylindrical body which has a hollow portion and an inner surface, and a second cylindrical body which is inserted into the hollow portion, and is configured so as to be extendable and shrinkable in a direction of the axis line,
the first cylindrical body includes a first base end portion which is close to the base end and a first tip end portion which is close to the tip end,
the second cylindrical body includes a second base end portion which is close to the base end and a second tip end portion which is close to the tip end,
the first cylindrical body includes a first engagement portion which is configured so as to deform elastically to an outer side at the first tip end portion in the inner surface, and
the second cylindrical body includes an engagement member which has a connection portion that is connected to the second cylindrical body at the second base end portion, a cylindrical portion that is arranged inside the hollow portion and has an outer surface, and a second engagement portion that is arranged in the outer surface, is capable of deforming elastically to an inner side and is configured so as to engage with the first engagement portion.

In the above-mentioned arm portion, the first cylindrical body includes the first engagement portion which can deform elastically toward the outer side, at the first tip end portion, and the second cylindrical body includes the second engagement portion which can deform elastically to the inner side, whereby can demonstrate the lock function at extension. To be specific, the arm portion can make the first engagement portion and the second engagement portion engage smoothly, and can make the engaged first engagement portion and second engagement portion disengage smoothly.

### [Aspect 2]

The arm portion according to aspect 1, wherein
the first engagement portion includes a hollow for engagement which is depressed toward the outer side, and
the second engagement portion includes a protrusion for engagement which is protruded toward the outer side.

In the above-mentioned arm portion, the first engagement portion and the second engagement portion are the hollow for engagement and the protrusion for engagement, respectively, whereby it is difficult for a contact mark which is caused by the first engagement portion to be left at the outer surface of the second cylindrical body.

### [Aspect 3]

The arm portion according to aspect 1 or 2, wherein
the protrusion for engagement includes a wall portion which is arranged on a base end side and/or a tip end side.

In the above-mentioned arm portion, the protrusion for engagement includes the predetermined wall portion, whereby it is difficult for the engaged first engagement portion and second engagement portion to be disengaged by a force, etc., which is applied to the arm portion unexpectedly. Accordingly, in a case in which the cleaning tool which includes the above-mentioned arm portion is used in the extended state, the above-mentioned arm portion can suppress the arm portion from shrinking unintentionally by the cleaning body of the cleaning tool bumping into the wall, etc.

### [Aspect 4]

The arm portion according to any one of aspects 1 to 3, wherein
the first cylindrical body further includes a bush member which configures the inner surface, at the first tip end portion and on an inner side of the first cylindrical body, and
the bush member includes the first engagement portion and a void portion which is arranged on an outer side of the first engagement portion.

In the above-mentioned arm portion, the first cylindrical body includes the predetermined bush member, whereby the first engagement portion can deform elastically toward the outer side, and the first engagement portion does not expose to the outer surface of the arm portion, and accordingly, it is difficult for the user to feel discomfort when holding the arm portion, and the arm portion has excellent aesthetics.

### [Aspect 5]

The arm portion according to any one of aspects 1 to 4, wherein
the first cylindrical body has a cross sectional shape of the inner surface which includes a long diameter that extends in the flexible direction and a short diameter that extends in a direction which crosses the flexible direction, and
the first engagement portion and the second engagement portion are a pair of first engagement portions and a pair of second engagement portions, respectively, each of which being arranged at both end portions in a direction of the short diameter.

Generally, when the arm portion has the inner surface cross sectional shape which is long in the flexible direction of the cleaning body attachment portion, there are advantages that it is difficult for the arm portion to rotate in the circumferential direction, and it is easier to hold the arm portion, etc., however, there is a tendency that it is easier for the arm portion to rattle in the flexible direction of the cleaning body attachment portion.

In the above-mentioned arm portion, the first engagement portion and the second engagement portion are a pair of first engagement portions and a pair of second engagement portions, respectively, each of the pair of first engagement portions and the pair of second engagement portions being arranged at both end portions in the direction of the short diameter, whereby even in a case in which the arm portion is bent in the flexible direction of the cleaning body attachment portion, it is easier for the lock function at extension to be demonstrated.

### [Aspect 6]

The arm portion according to aspect 5, wherein
in the direction of the short diameter, a distance between the pair of first engagement portions is shorter than a distance between the pair of second engagement portions.

In the above-mentioned arm portion, the distance between the pair of first engagement portions and the distance between the pair of second engagement portions are in a predetermined relationship, whereby in the above-mentioned arm portion in the extension state, it is difficult for the engaged first engagement portion and second engagement portion to be disengaged by a force, etc., which is applied to the arm portion unexpectedly. Accordingly, in a case in which the cleaning tool which includes the above-mentioned arm portion is used in the extended state, the above-mentioned arm portion can suppress the arm portion from shrinking unintentionally by the cleaning body of the cleaning tool bumping into the wall, etc.

### [Aspect 7]

The arm portion according to aspect 5 or 6, wherein
in the direction of the short diameter, a distance between the pair of second engagement portions is shorter than a distance between the facing inner surface.

In the above-mentioned arm portion, the distance between the pair of second engagement portions and the distance between the facing inner surfaces are in a predetermined relationship. Accordingly, in a case in which the above-mentioned arm portion is in a state other than the extension state, for example, in the shrinkage state, it is not necessary for each of the pair of second engagement portions to deform elastically to the inner side, or each of the pair of second engagement portions is to deform weakly to the inner side, whereby it is difficult for the flexibility of the pair of second engagement portions to be lowered over time.

### [Aspect 8]

The arm portion according to any one of aspects 5 to 7, wherein
the cylindrical portion includes a pair of smaller flexibility portions which are arranged at both end portions in a direction of the long diameter, and a pair of greater flexibility portions which are arranged at the both end portions in the direction of the short diameter, and
each of the pair of greater flexibility portions includes the second engagement portion.

In the above-mentioned arm portion, the cylindrical portion of the engagement member includes a pair of greater flexibility portions which are arranged at the both end portions in the direction of the short diameter (both side portions in the flexible direction), and a pair of smaller flexibility portions which are arranged at both end portions in the direction of the long diameter (both end portions in the flexible direction). Accordingly, in the cleaning body which includes the above-mentioned arm portion, even in a case in which the force in the flexible direction is applied to the arm portion, the pair of smaller flexibility portions can demonstrate the rattling suppressing function which suppresses the rattling in the flexible direction of the arm portion. Further, when the above-mentioned cleaning body is being used, not only in a case in which the force in the flexible direction is not applied to the arm portion, but also even in a case in which the force is applied in the flexible direction, the lock function at extension can be demonstrated.

### [Aspect 9]

The arm portion according to aspect 8, wherein
the cylindrical portion includes a slit portion which extends in the direction of the axis line, between each of the pair of greater flexibility portions, and between each of the pair of smaller flexibility portions.

In the above-mentioned arm portion, the cylindrical portion includes a slit portion which extends in a direction of the axis line of the arm portion, between the pair of greater flexibility portion, and between the pair of smaller flexibility portion, whereby it is easier for each of the pair of greater flexibility portions and each of the pair of smaller flexibility portions to demonstrate the function thereof independently.

Further, by the presence of the slit portion, it is easier for the cylindrical portion to change the shape of the cross sectional surface in the direction orthogonal to the axis line of the arm portion. Accordingly, in a case in which the first cylindrical body changes the shape of the inner surface at the base end side and at the tip end side, for example, even in a case in which the inner surface cross sectional shape of the first cylindrical body is tapered such that the same becomes smaller from the base end side toward the tip end side, the cylindrical portion, and the engagement member can continue demonstrating the lock function at extension and the rattling suppressing function

### [Aspect 10]

The arm portion according to aspect 8 or 9, wherein
each of the pair of greater flexibility portions includes a greater flexibility portion circumferential direction extending portion which extends in the circumferential direction and is configured to slide on the inner surface, and a greater flexibility portion axis line direction extending portion which extends in the direction of the axis line and is configured to slide on the inner surface.

In the above-mentioned arm portion, each of the pair of greater flexibility portions includes the greater flexibility portion circumferential direction extending portion and the greater flexibility portion axis line direction extending portion, whereby the pair of greater flexibility portions, and the engagement member can demonstrate the sliding function.

### [Aspect 11]

The arm portion according to any one of aspects 8 to 10, wherein
each of the pair of smaller flexibility portions includes a smaller flexibility portion circumferential direction extending portion which extends in the circumferential direction and is configured to slide on the inner surface of the first cylindrical body, and a smaller flexibility portion axis line direction extending portion which extends in the direction of the axis line and is configured to slide on the inner surface.

In the above-mentioned arm portion, each of the pair of smaller flexibility portions includes the smaller flexibility portion circumferential direction extending portion and the smaller flexibility portion axis line direction extending portion, whereby the pair of smaller flexibility portions, and the engagement member can demonstrate the sliding function.

### [Aspect 12]

The arm portion according to any one of aspects 8 to 11, wherein
the first cylindrical body further includes a lock member which includes a first lock portion at the first base end portion, that is arranged in the hollow portion and is configured so as not to slide on the inner surface, and
the engagement member further includes a second lock portion which is arranged at the cylindrical portion, locks with the first lock portion, is to be arranged in the hollow portion and is configured so as not to slide on the inner surface.

In the above-mentioned arm portion, the first cylindrical body further includes the lock member which includes the first lock portion, and the engagement member further includes the second lock portion, whereby the above-mentioned arm portion can demonstrate the lock function at shrinkage.

### [Aspect 13]

The arm portion according to aspect 12, wherein
one of the first lock portion and the second lock portion is a protrusion portion for fitting, and the other is a hollow portion for fitting.

In the above-mentioned arm portion, one of the first lock portion and the second lock portion is the protrusion portion for fitting, and the other is the hollow portion for fitting, whereby it is easier for the lock mechanism at shrinkage to operate only by making the arm portion shrink, and for the lock mechanism at shrinkage to be canceled only by making the arm portion extend, and the shrinkage state of the arm portion can be easily fixed or canceled.

### [Aspect 14]

The arm portion according to aspect 13, wherein
the protrusion portion for fitting is a pair of protrusion portions for fitting, each of which including an extending portion that extends in the direction of the axis line, and a protruded portion that protrudes toward the outer side with a tip end of the extending portion as a base point, and
the hollow portion for fitting is a pair of hollow portions for fitting, each of which including a recessed portion that is recessed toward the outer side.

In the above-mentioned arm portion, the protrusion portion for fitting and the hollow portion for fitting has the predetermined structure, whereby it is easier for the lock mechanism at shrinkage to operate only by making the arm portion shrink, and for the lock mechanism at shrinkage to be canceled only by making the arm portion extend, and the shrinkage state of the arm portion can be easily fixed or canceled.

### [Aspect 15]

The arm portion according to aspect 13 or 14, wherein
the second lock portion is the protrusion portion for fitting, and
the protrusion portion for fitting has one or both of the pair of smaller flexibility portions as a base point.

In the above-mentioned arm portion, the second lock portion is the protrusion portion for fitting, and the protrusion portion for fitting has one or both of the pair of smaller flexibility portions as a base point, whereby it is difficult for the position of the protrusion portion for fitting, especially, the position in the direction orthogonal to the axis line of the arm portion, to be shifted due to the difficulty of being bent for the pair of smaller flexibility portions, and it is easier for the lock mechanism at shrinkage to be activated or canceled reliably.

Hereinbelow, the arm portion for a cleaning tool according to the present disclosure (hereinbelow, which may be referred to simply as "the arm portion") is explained in detail along with the cleaning tool.

FIG. 1 to FIG. 12 are drawings so as to explain the cleaning tool 1 which includes the first arm portion 5 as the arm portion according to one embodiment of the present disclosure (hereinbelow, which is referred to as "the first embodiment").

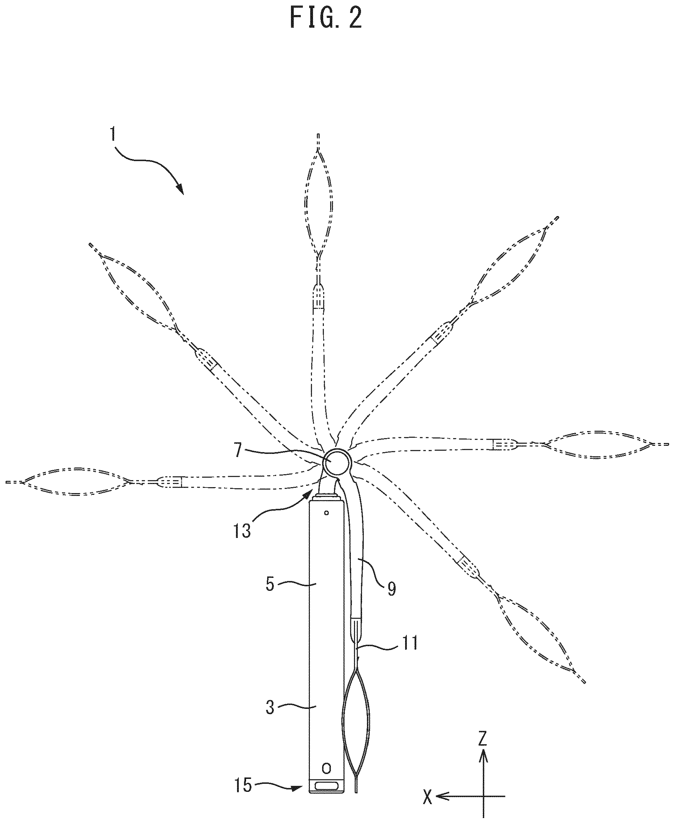

FIG. 1 is a perspective view of the cleaning tool 1 in the cleaning state, to which the cleaning body 101 is attached. FIG. 2 is a right side surface view of the cleaning tool 1 in the stored state.

The cleaning tool 1 includes the first arm portion 5 which has the grip portion 3, the second arm portion 9, the rotation portion 7 which connects the first arm portion 5 and the second arm portion 9, and can adjust the arm angle θ, and the cleaning body attachment portion 11 which is connected to the second arm portion 9 and for attaching the cleaning body 101. The first arm portion 5 includes the base end 15 which is present at the farthest position from the rotation portion 7 of the first arm portion 5, and the tip end 13 which is present at the closest position from the rotation portion 7 of the first arm portion 5.

Incidentally, the arm angle θ is the angle between the first arm portion axis line AL₁ of the first arm portion 5 and the second arm portion axis line AL₂ of the second arm portion 9.

The cleaning body attachment portion 11 has a structure which is most likely to be bent in the flexible direction FD, and even in a case in which the cleaning body attachment portion 11 is pressed strongly to a surface to be cleaned so as to clean the surface to be cleaned, the cleaning body attachment portion 11 deforms elastically in the flexible direction, whereby suppresses the surface to be cleaned from being damaged, and also suppresses the cleaning body attachment portion 11 and the cleaning tool 1 from being damaged.

Incidentally, the cleaning body attachment portion 11 has a known structure which is similar to the one disclosed in Japanese Unexamined Patent Publication No. 2014 - 168646, and thus the explanation thereof is omitted.

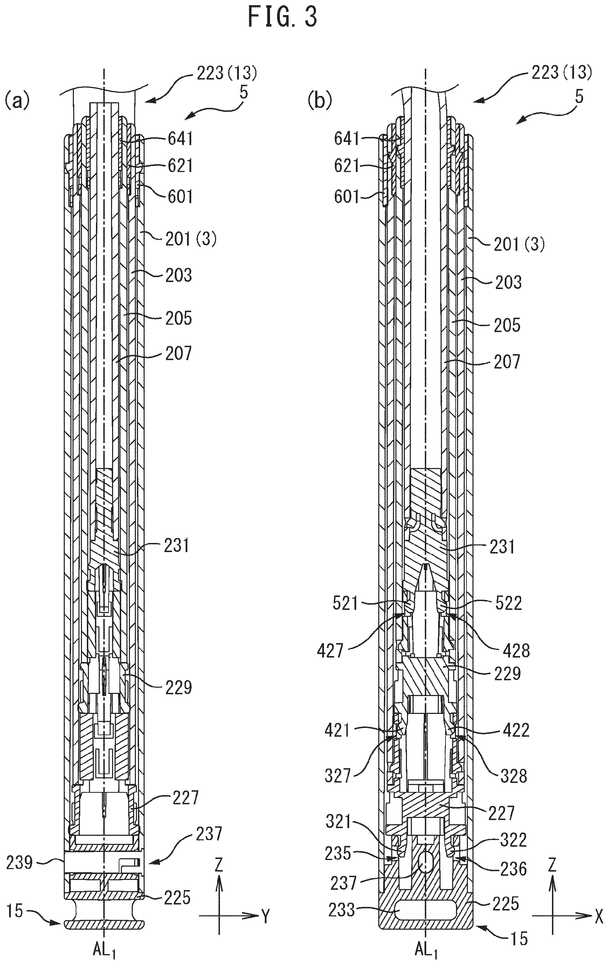

FIG. 3 is a view for explaining the first arm portion 5 in the shrinkage state. To be specific, FIG. 3(a) is a cross sectional view of the front surface of the first arm portion 5 in the shrinkage state, which passes through the first arm portion axis line AL₁, and FIG. 3(b) is a cross sectional view of the left side surface of the first arm portion 5 in the shrinkage state, which passes through the first arm portion axis line AL₁.

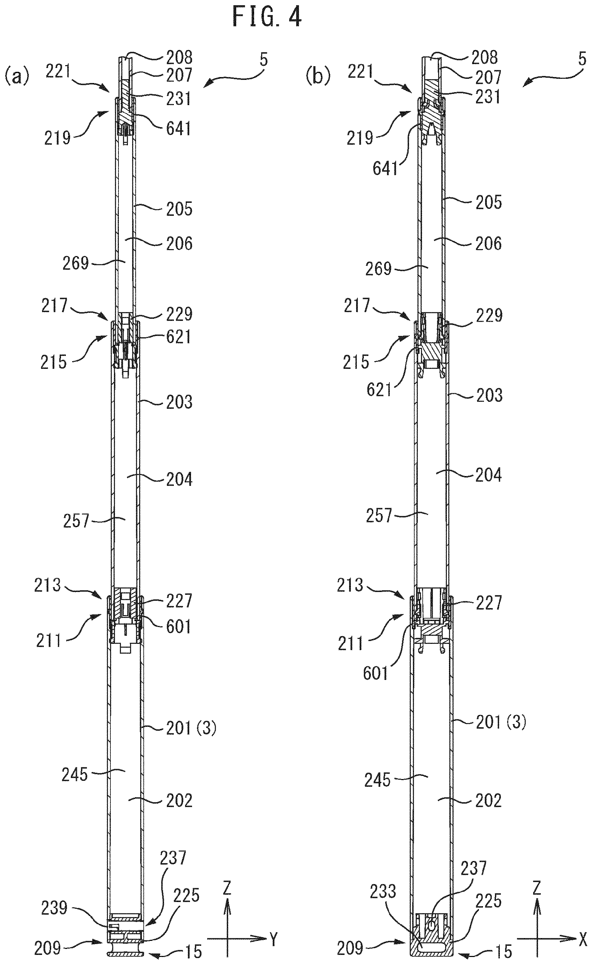

FIG. 4 is a view for explaining the first arm portion 5 in the extension state. To be specific, FIG. 4(a) is a cross sectional view of the front surface of the first arm portion 5 in the extension state, which passes through the first arm portion axis line AL₁, and FIG. 4(b) is a cross sectional view of the left side surface of the first arm portion 5 in the extension state, which passes through the first arm portion axis line AL₁.

The first arm portion 5 includes the first arm portion axis line AL₁ and the circumferential direction PD of the first arm portion axis line AL₁. The first arm portion 5 includes the first cylindrical body 201 which includes the first cylindrical body hollow portion 202, the second cylindrical body 203 which includes the second cylindrical body hollow portion 204 and is inserted into the first cylindrical body hollow portion 202, the third cylindrical body 205 which includes the third cylindrical body hollow portion 206 and is inserted into the second cylindrical body hollow portion 204, and the fourth cylindrical body 207 which is inserted into the third cylindrical body hollow portion 206. The fourth cylindrical body 207 includes the fourth cylindrical body hollow portion 208.

Incidentally, the cross sectional shapes in the direction orthogonal to the first arm portion axis line AL₁ of the first cylindrical body 201, the first cylindrical body hollow portion 202, the second cylindrical body 203, the second cylindrical body hollow portion 204, the third cylindrical body 205, the third cylindrical body hollow portion 206, the fourth cylindrical body 207, and the fourth cylindrical body hollow portion 208 are oval shapes each of which having a long diameter that extends in the direction parallel to the flexible direction FD and a short diameter that extends in the direction orthogonal to the flexible direction, and are mutually approximately similar shapes. Incidentally, in the first embodiment, the X axis direction is the direction of the long diameter, and the Y axis direction is the direction of the short diameter.

Further, each of the first inner surface 245 of the first cylindrical body 201 (that is, the outer shape of the first cylindrical body hollow portion 202), the second inner surface 247 of the second cylindrical body 203 (that is, the outer shape of the second cylindrical body hollow portion 204), the third inner surface 269 of the third cylindrical body 205 (that is, the outer shape of the third cylindrical body hollow portion 206), and the fourth inner surface 279 of the fourth cylindrical body 207 (that is, the outer shape of the fourth cylindrical body hollow portion 208) has a tapered shape, and has a structure in which the inner surface cross sectional shape becomes gradually smaller along the first arm portion axis line AL₁ from the base end 15 toward the tip end 13.

Incidentally, each of the outer surface of the first cylindrical body 201, the outer surface of the second cylindrical body 203, the outer surface of the third cylindrical body 205, and the outer surface of the fourth cylindrical body 207 does not have a tapered shape, and has a structure in which the outer surface cross sectional shape is constant along the first arm portion axis line AL₁ from the base end 15 toward the tip end 13.

The first arm portion 5 makes the first cylindrical body 201, the second cylindrical body 203, the third cylindrical body 205, and the fourth cylindrical body 207 extend relatively in the direction of the first arm portion axis line AL₁, whereby can transform from the shrinkage state as shown in FIG. 3 to the extension state as shown in FIG. 4.

The first cylindrical body 201 includes the first base end portion 209 which is close to the base end 15 and the first tip end portion 211 which is close to the tip end 13, the second cylindrical body 203 includes the second base end portion 213 which is close to the base end 15 and the second tip end portion 215 which is close to the tip end 13, the third cylindrical body 205 includes the third base end portion 217 which is close to the base end 15 and the third tip end portion 219 which is close to the tip end 13, and the fourth cylindrical body 207 includes the fourth base end portion 221 which is close to the base end 15 and the fourth tip end portion 223 which is close to the tip end 13.

The first cylindrical body 201 includes the first bush member 601 on the first inner surface 245 at the first tip end portion 211, the second cylindrical body 203 includes the second bush member 621 on the second inner surface 247 at the second tip end portion 215, and the third cylindrical body 205 includes the third bush member 641 on the third inner surface 269 at the third tip end portion 219.

The first cylindrical body 201 includes the lock member 225 at the first base end portion 209, the second cylindrical body 203 includes the second engagement member 227 at the second base end portion 213, which is an engagement member connected to the second cylindrical body 203, the third cylindrical body 205 includes the third engagement member 229 at the third base end portion 217, which is an engagement member connected to the third cylindrical body 205, and the fourth cylindrical body 207 includes the fourth engagement member 231 at the fourth base end portion 221, which is an engagement member connected to the fourth cylindrical body 207.

The lock member 225 and the second engagement member 227 are configured so as to give the lock function at shrinkage to the first cylindrical body 201 and the second cylindrical body 203, the second engagement member 227 and the third engagement member 229 are configured so as to give the lock function at shrinkage to the second cylindrical body 203 and the third cylindrical body 205, and the third engagement member 229 and the fourth engagement member 231 are configured so as to give the lock function at shrinkage to the third cylindrical body 205 and the fourth cylindrical body 207.

Further, the first bush member 601 and the second engagement member 227 are configured so as to give the lock function at extension to the first cylindrical body 201 and the second cylindrical body 203, the second bush member 621 and the third engagement member 229 are configured so as to give the lock function at extension to the second cylindrical body 203 and the third cylindrical body 205, and the third bush member 641 and the fourth engagement member 231 are configured so as to give the lock function at extension to the third cylindrical body 205 and the fourth cylindrical body 207.

Still further, the second cylindrical portion 303 of the second engagement member 227 to be described later is configured so as to give the sliding function to the first cylindrical body 201 and the second cylindrical body 203, the third cylindrical portion 403 of the third engagement member 229 to be described later is configured so as to give the sliding function to the second cylindrical body 203 and the third cylindrical body 205, and the fourth cylindrical portion 503 of the fourth engagement member 231 to be described later is configured so as to give the sliding function to the third cylindrical body 205 and the fourth cylindrical body 207.

Incidentally, the second engagement member 227, the third engagement member 229, and the fourth engagement member 231 are involved in all of the lock function at shrinkage, the sliding function, and the lock function at extension, and thus, explanations are given in the functional orders involved at the time when the cleaning tool 1 transforms from the shrinkage state to the extension state, that is, in the order of the lock function at shrinkage, the sliding function, and the lock function at extension.

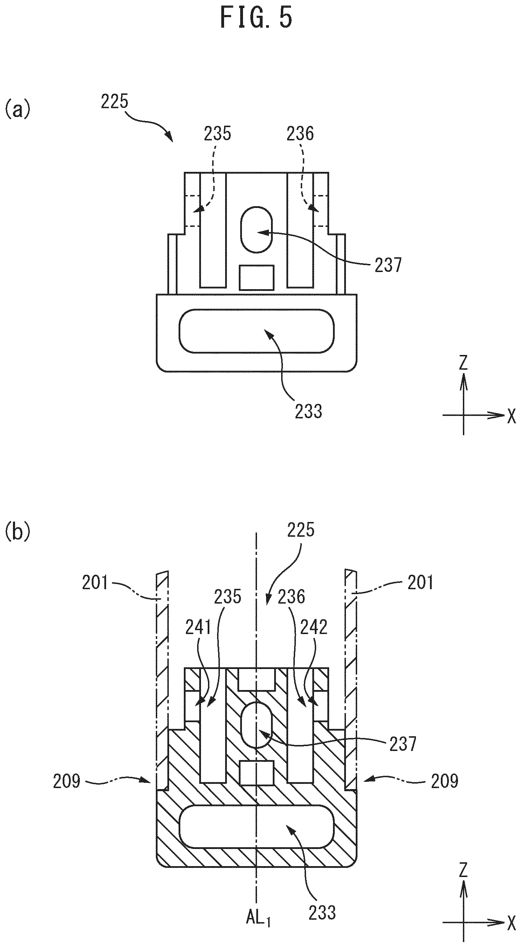

FIG. 5 is a view for explaining the lock member 225. To be specific, FIG. 5(a) is the left side surface view of the lock member 225, and FIG. 5(b) is a cross sectional view of the left side surface of the lock member 225, which passes through the first arm portion axis line AL₁. Incidentally, in FIG. 5(b), the first cylindrical body 201 is shown in broken lines for the sake of understanding.

The lock member 225 includes the hanging hole 233 so as to hang and store the cleaning tool 1, the pair of first hollow portion for fitting 235 and first hollow portion for fitting 236, and the screw hole 237 so as to fix the lock member 225 on the first cylindrical body 201.

The pair of first hollow portion for fitting 235 and first hollow portion for fitting 236 include the recessed portion 241 and the recessed portion 242, respectively, which are recessed in the outer side, that is, in the direction away from the first arm portion axis line AL₁. The recessed portion 241 and the recessed portion 242 are through holes.

The pair of first hollow portion for fitting 235 and first hollow portion for fitting 236 configure the lock mechanism at shrinkage with the pair of second protrusion portion for fitting 321 and the second protrusion portion for fitting 322 (the second lock portion) of the second cylindrical portion 303 of the second engagement member 227 to be described later, as the first lock portion.

The pair of first hollow portion for fitting 235 and first hollow portion for fitting 236 are arranged at the first cylindrical body hollow portion 202, and are configured so as not to slide on the first inner surface 245 of the first cylindrical body 201.

Incidentally, the lock member 225 is fixed on the first cylindrical body 201 by the screw 239 which is inserted into the screw hole 237, as shown in FIG. 3 and FIG. 4.

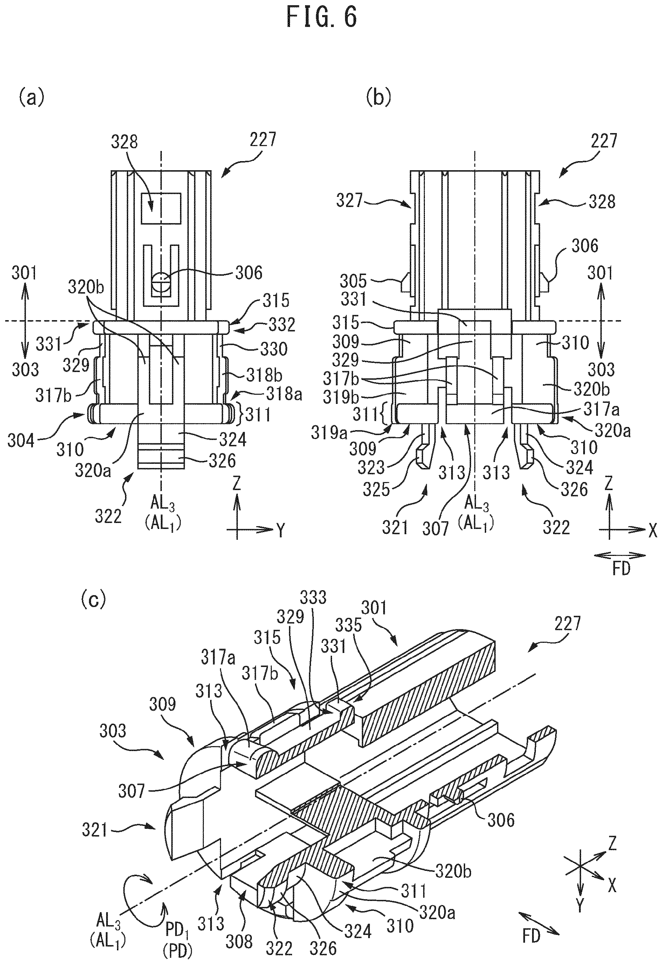

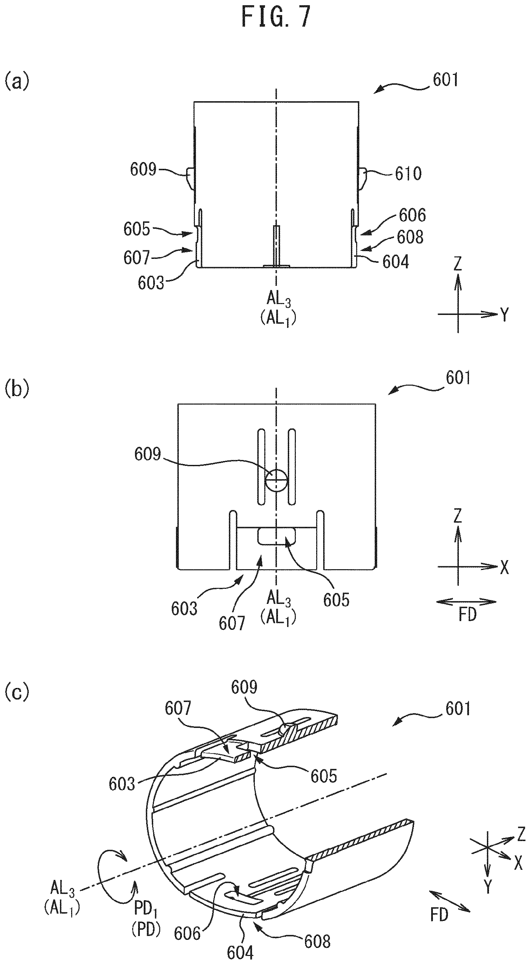

FIG. 6 is a view for explaining the second engagement member 227. To be specific, FIG. 6(a) is the front surface view of the second engagement member 227, FIG. 6(b) is the left side surface view of the second engagement member 227, and FIG. 6(c) is the perspective view of the second engagement member 227. FIG. 7 is a view for explaining the first bush member 601. To be specific, FIG. 7(a) is the front surface view of the first bush member 601, FIG. 7(b) is the left side surface view of the first bush member 601, and FIG. 7(c) is the perspective view of the first bush member 601.

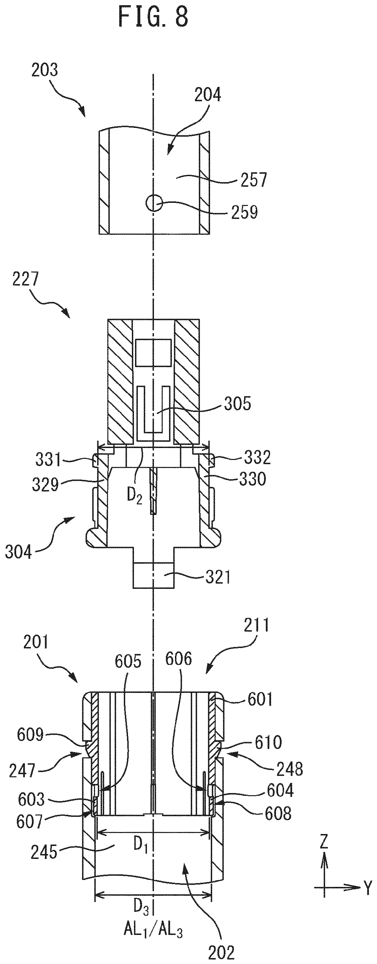

FIG. 8 is a view for explaining the relationship between the second engagement member 227 and the first bush member 601. FIG. 8 is a cross sectional view of the front surface of the second engagement member 227 and the first bush member 601, which passes through the second cylindrical portion axis line AL₃ (the first arm portion axis line AL₁). Further, in FIG. 8, the second engagement member 227, the first cylindrical body 201 and the first bush member 601, and the second cylindrical body 203, are shown so as to be apart from each other, for the sake of explanation.

The second engagement member 227 includes the second connection portion 301 as the connection portion which is connected to the second cylindrical body 203 at the second base end portion 213, the second cylindrical portion 303 as the cylindrical portion which is arranged inside the first cylindrical body hollow portion 202, and the pair of second cylindrical portion second engagement part 329 and the second cylindrical portion second engagement part 330 which are arranged on the second cylindrical portion outer surface 304 of the second cylindrical portion 303.

The second connection portion 301 has an outer surface cross sectional shape along the inner surface cross sectional shape of the second cylindrical body 203 (the outer surface cross sectional shape of the second cylindrical body hollow portion 204), is inserted into the second cylindrical body hollow portion 204 of the second cylindrical body 203, and is fixed to the second cylindrical body 203.

Further, the pair of second cylindrical portion second engagement part 329 and the second cylindrical portion second engagement part 330 are arranged at the both side portions in the flexible direction FD (the both end portions in the direction orthogonal to the flexible direction FD). The pair of second cylindrical portion second engagement part 329 and the second cylindrical portion second engagement part 330 include the protrusion for engagement 331 and the protrusion for engagement 332, respectively, which protrude toward the outer side. The pair of the protrusion for engagement 331 and the protrusion for engagement 332 are configured so as to be engaged with the pair of first bush member hollow for engagement 605 and the first bush member hollow for engagement 606, respectively, of the first bush member 601 to be described later.

The second cylindrical portion 303 extends along the first arm portion axis line AL₁ from the second base end portion 213 of the second cylindrical body 203 to the outer side in the opposite direction of the second cylindrical body 203, and is configured so as to be capable of sliding on the inner surface of the first cylindrical body 201 in conjunction with the movement of the second cylindrical body 203. The second cylindrical portion 303 is arranged at the inner portion of the first cylindrical body 201 (the first cylindrical body hollow portion 202) in the both of the shrinkage state and the extension state of the first arm portion 5.

The second cylindrical portion 303 includes the second cylindrical portion axis line AL₃ which is the axis line of the second cylindrical portion 303, and the second circumferential direction PD₁ which is the circumferential direction of the second cylindrical portion axis line AL₃. Incidentally, in a state in which the second engagement member 227 is housed in the first arm portion 5, the second cylindrical portion axis line AL₃ is present on the same straight line as the first arm portion axis line AL₁, and the second circumferential direction PD₁ is the same as the circumferential direction PD of the first arm portion 5. Accordingly, in a state in which the second engagement member 227 is housed in the first arm portion 5, the second cylindrical portion axis line AL₃ and the second circumferential direction PD₁ may be read as the first arm portion axis line AL₁ and the circumferential direction PD, respectively.

The second cylindrical body 203 includes the pair of second cylindrical body fitting holes (which are not shown) at the second base end portion 213. The second connection portion 301 includes the pair of second fitting protrusion 305 and the second fitting protrusion 306 which fit with the pair of second cylindrical body fitting holes (which are not shown) of the second cylindrical body 203. The second engagement member 227 makes the second fitting protrusion 305 and the second fitting protrusion 306 fit with the second base end portion fitting hole 259 and the second base end portion fitting hole (which is not shown), respectively, which are arranged at the second base end portion 213 of the second cylindrical body 203, whereby is fixed to the second cylindrical body 203.

The second base end portion 213 of the second cylindrical body 203 is adjacent to the second protruded portion for engagement 315 which is formed in the second cylindrical portion 303, whereby the rattling of the second cylindrical portion 303, and the second engagement member 227 is suppressed.

Further, the second connection portion 301 includes the pair of second hollow portion for fitting 327 and the second hollow portion for fitting 328 for the first arm portion 5, to be specific, the second cylindrical body 203 and the third cylindrical body 205, to operate the lock mechanism at shrinkage so as to retain the shrinkage state thereof.

The second cylindrical portion 303 includes the pair of second greater flexibility portion 307 and the second greater flexibility portion 308, and the pair of second smaller flexibility portion 309 and the second smaller flexibility portion 310. The pair of second greater flexibility portion 307 and the second greater flexibility portion 308 are arranged at the both side portions in the flexible direction FD (the both end portions in the direction orthogonal to the flexible direction FD), and the pair of second smaller flexibility portion 309 and the second smaller flexibility portion 310 are arranged at the both end portions in the flexible direction FD.

The second cylindrical portion 303 includes the second protruded portion for engagement 315 at the boundary with the second connection portion 301. The second protruded portion for engagement 315 is arranged along the second circumferential direction PD₁ of the second cylindrical portion 303, and protrudes toward the outer side of the second cylindrical portion axis line AL₃.

The flexibility to the inner side, that is, toward the direction closer to the second cylindrical portion axis line AL₃ of each of the pair of second smaller flexibility portion 309 and the second smaller flexibility portion 310 is smaller than that of each of the pair of second greater flexibility portion 307 and the second greater flexibility portion 308.

The second cylindrical portion 303 is partitioned into the pair of second greater flexibility portion 307 and the second greater flexibility portion 308, and the pair of second smaller flexibility portion 309 and the second smaller flexibility portion 310. Each of the pair of second greater flexibility portion 307 and the second greater flexibility portion 308 and each of the pair of second smaller flexibility portion 309 and the second smaller flexibility portion 310 are arranged alternately in the second circumferential direction PD₁, and the pair of second smaller flexibility portion 309 and the second smaller flexibility portion 310 are arranged at both ends in the long diameter direction (the X axis direction) of the oval cross sectional shape of the first cylindrical body 201, and the pair of second greater flexibility portion 307 and the second greater flexibility portion 308 are arranged at both ends in the short diameter direction (the Y axis direction) of the oval cross sectional shape of the first cylindrical body 201

In between each of the pair of second greater flexibility portion 307 and the second greater flexibility portion 308 and each of the pair of second smaller flexibility portion 309 and the second smaller flexibility portion 310, four second slit portions 313 in total with a predetermined width are arranged. Accordingly, each of the pair of second greater flexibility portion 307 and the second greater flexibility portion 308 and each of the pair of second smaller flexibility portion 309 and the second smaller flexibility portion 310 can deform elastically (can adjust the degree of the flexibility) independently.

The second greater flexibility portion 307 includes the second greater flexibility portion circumferential direction extending portion 317a which extends in the second circumferential direction PD₁ and is configured so as to slide on the first inner surface 245, and the pair of second greater flexibility portion axis line direction extending portions 317b which extend in the direction of the second cylindrical portion axis line AL₃ and are configured so as to slide on the first inner surface 245. The second greater flexibility portion circumferential direction extending portion 317a and each of the pair of second greater flexibility portion axis line direction extending portions 317b protrude toward the outer side of the second cylindrical portion axis line AL₃. The pair of second greater flexibility portion axis line direction extending portions 317b are arranged at both end portions in the second circumferential direction PD₁ of the second greater flexibility portion 307.

The second greater flexibility portion 308 includes the second greater flexibility portion circumferential direction extending portion 318a which extends in the second circumferential direction PD₁ and is configured so as to slide on the first inner surface 245, and the pair of second greater flexibility portion axis line direction extending portions 318b which extend in the direction of the second cylindrical portion axis line AL₃ and are configured so as to slide on the first inner surface 245. The second greater flexibility portion circumferential direction extending portion 318a and each of the pair of second greater flexibility portion axis line direction extending portions 318b protrude toward the outer side of the second cylindrical portion axis line AL₃. The pair of second greater flexibility portion axis line direction extending portions 318b are arranged at both end portions in the second circumferential direction PD₁ of the second greater flexibility portion 308.

By the second greater flexibility portion circumferential direction extending portion 317a and the pair of second greater flexibility portion axis line direction extending portions 317b, and further the second greater flexibility portion circumferential direction extending portion 318a and the pair of second greater flexibility portion axis line direction extending portions 318b, the rigidity of the second greater flexibility portion 307 and the second greater flexibility portion 308 is improved, and even in a case in which the cleaning tool 1 is used over a long period of time, the second greater flexibility portion 307 and the second greater flexibility portion 308 follow the changes in the (tapered) shape of the inner surface of the first cylindrical body 201, the changes in the angle of the first cylindrical body 201 and the second cylindrical body 203, etc., whereby assist the sliding function of the second cylindrical portion 303.

The second smaller flexibility portion 309 includes the second smaller flexibility portion circumferential direction extending portion 319a which extends in the second circumferential direction PD₁ and is configured so as to slide on the first inner surface 245, and the pair of second smaller flexibility portion axis line direction extending portions 319b which extend in the direction of the second cylindrical portion axis line AL₃ and are configured so as to slide on the first inner surface 245. The second smaller flexibility portion circumferential direction extending portion 319a and each of the pair of second smaller flexibility portion axis line direction extending portions 319b protrude toward the outer side of the second cylindrical portion axis line AL₃. The pair of second smaller flexibility portion axis line direction extending portions 319b are arranged with an interval of the predetermined distance in the second circumferential direction PDi.

Further, the second smaller flexibility portion 310 includes the second smaller flexibility portion circumferential direction extending portion 320a which extends in the second circumferential direction PD₁ and is configured so as to slide on the first inner surface 245, and the pair of second smaller flexibility portion axis line direction extending portions 320b which extend in the direction of the second cylindrical portion axis line AL₃ and are configured so as to slide on the first inner surface 245. The second smaller flexibility portion circumferential direction extending portion 320a and each of the pair of second smaller flexibility portion axis line direction extending portions 320b protrude toward the outer side of the second cylindrical portion axis line AL₃. The pair of second smaller flexibility portion axis line direction extending portions 320b are arranged with an interval of the predetermined distance in the second circumferential direction PDi.

The second smaller flexibility portion circumferential direction extending portion 319a and the pair of second smaller flexibility portion axis line direction extending portions 319b, and further the second smaller flexibility portion circumferential direction extending portion 320a and the pair of second smaller flexibility portion axis line direction extending portions 320b assist the sliding function of the second cylindrical portion 303, and suppress the second cylindrical body 203 from rattling with respect to the first cylindrical body 201.

Incidentally, the second greater flexibility portion circumferential direction extending portion 317a and the second greater flexibility portion circumferential direction extending portion 318a, and further the second smaller flexibility portion circumferential direction extending portion 319a and the second smaller flexibility portion circumferential direction extending portion 320a form the second circumferential direction extending portion 311 which goes around the second circumferential direction PD₁ with the second slit portions 313 present in between.

Incidentally, in addition to the second protruded portion for engagement 315, the second cylindrical portion 303 includes the second circumferential direction extending portion 311 (the second greater flexibility portion circumferential direction extending portion 317a and the second greater flexibility portion circumferential direction extending portion 318a and further the second smaller flexibility portion circumferential direction extending portion 319a and the second smaller flexibility portion circumferential direction extending portion 320a), and the pair of second greater flexibility portion axis line direction extending portions 317b, the pair of second greater flexibility portion axis line direction extending portions 318b, and the pair of second smaller flexibility portion axis line direction extending portions 319b, the pair of second smaller flexibility portion axis line direction extending portions 320b, whereby when the first cylindrical body 201 and the second cylindrical body 203 are extended from the shrinkage state to the extension state, the second circumferential direction extending portion 311, etc., of the second cylindrical portion 303 of the second engagement member 227 slides on the first cylindrical body 201, and the first cylindrical body 201 and the second cylindrical body 203 can be fixed at any position between the shrinkage state and the extension state.

In the first embodiment, the first arm portion 5, to be specific, the first cylindrical body 201 and the second cylindrical body 203, include the lock mechanism at shrinkage so as to retain the shrinkage state thereof.

To be specific, the second engagement member 227 further includes the pair of second protrusion portion for fitting 321 and the second protrusion portion for fitting 322 which are connected to the second cylindrical portion 303, as the second lock portion. The second protrusion portion for fitting 321 includes the second cylindrical portion axis line direction extending portion 323 which has the second smaller flexibility portion 309 as the base point and extends in parallel with the second cylindrical portion axis line AL₃, and the second protruded portion 325 which has the tip end of the second cylindrical portion axis line direction extending portion 323 as the base point, and extends in the direction away from the second cylindrical portion axis line AL₃.

Each of the pair of second protrusion portion for fitting 321 and the second protrusion portion for fitting 322 is arranged at the first cylindrical body hollow portion 202, and is configured so as not to slide on the first inner surface 245 of the first cylindrical body 201.

In the same manner, the second protrusion portion for fitting 322 includes the second cylindrical portion axis line direction extending portion 324 which has the second smaller flexibility portion 310 as the base point and extends in parallel with the second cylindrical portion axis line AL₃, and the second protruded portion 326 which has the tip end of the second cylindrical portion axis line direction extending portion 324 as the base point, and extends toward the outer side, that is, in the direction away from the second cylindrical portion axis line AL₃. The second protrusion portion for fitting 321 and the second protrusion portion for fitting 322 extend from the second smaller flexibility portion 309 and the second smaller flexibility portion 310, respectively, whereby it is difficult for the position of the second protrusion portion for fitting 321 and the second protrusion portion for fitting 322 to be shifted due to the small flexibility of the second smaller flexibility portion 309 and the second smaller flexibility portion 310, especially, it is difficult for such a position to be shifted toward or away from the second cylindrical portion axis line AL₃, and thus it is easier for the lock function at shrinkage to be demonstrated reliably.

The pair of second protrusion portion for fitting 321 and the second protrusion portion for fitting 322 configures the lock mechanism at shrinkage with the pair of first hollow portion for fitting 235 and the first hollow portion for fitting 236 of the lock member 225. To be specific, the first cylindrical body 201 and the second cylindrical body 203 are made to move relatively closer to each other, whereby the pair of second protrusion portion for fitting 321 and the second protrusion portion for fitting 322, and the pair of first hollow portion for fitting 235 and first hollow portion for fitting 236 move closer to each other so that they are locked, and the first cylindrical body 201 and the second cylindrical body 203 are made to move relatively away from each other, whereby the pair of second protrusion portion for fitting 321 and the second protrusion portion for fitting 322, and the pair of first hollow portion for fitting 235 and first hollow portion for fitting 236 move away from each other so as to be unlocked. As a result, the first cylindrical body 201 and the second cylindrical body 203 lock at shrinkage.

At the shrinkage state of the first cylindrical body 201 and the second cylindrical body 203, the lock member 225 and the second engagement member 227 fit the second protrusion portion for fitting 321 into the first hollow portion for fitting 235, and fit the second protrusion portion for fitting 322 into the first hollow portion for fitting 236, whereby the first cylindrical body 201 and the second cylindrical body 203 are locked.

On the other hand, when the first cylindrical body 201 and the second cylindrical body 203 are put to the extension state, that is, when the lock member 225 and the second engagement member 227 are made to move away from each other, the second protrusion portion for fitting 321 is released from the first hollow portion for fitting 235, and the second protrusion portion for fitting 322 is released from the first hollow portion for fitting 236, whereby the lock of the first cylindrical body 201 and the second cylindrical body 203 is released.

In the first embodiment, the first arm portion 5, to be specific, the first cylindrical body 201 and the second cylindrical body 203, include the lock mechanism at extension so as to retain the extension state.

As shown in FIG. 7, the first bush member 601 includes the pair of first bush member first engagement portion 603 and the first bush member first engagement portion 604 which are arranged at the both side portions in the flexible direction FD (the both end portions in the direction orthogonal to the flexible direction FD).

The first bush member first engagement portion 603 includes the first bush member hollow for engagement 605 which is configured so as to engage with the second cylindrical portion second engagement part 329 of the second cylindrical portion 303, and at the outer side of the first bush member first engagement portion 603, the first bush member void portion 607 which is formed in between the first cylindrical body 201 is arranged (refer to FIG. 8). Accordingly, the first bush member first engagement portion 603 is configured so as to deform elastically toward the outer side. The first bush member hollow for engagement 605 is depressed toward the outer side. To be specific, the first bush member hollow for engagement 605 is a through hole which is penetrated toward the outer side.

In the same manner, the first bush member first engagement portion 604 includes the first bush member hollow for engagement 606 which is configured so as to engage with the second cylindrical portion second engagement part 330 of the second cylindrical portion 303, and at the outer side of the first bush member first engagement portion 604, the first bush member void portion 608 which is formed in between the first cylindrical body 201 is arranged (refer to FIG. 8). Accordingly, the first bush member first engagement portion 604 is configured so as to deform elastically toward the outer side. The first bush member hollow for engagement 606 is depressed toward the outer side. To be specific, the first bush member hollow for engagement 606 is a through hole which is penetrated toward the outer side.

Further, the first bush member 601 includes the pair of first bush portion protrusion for fitting 609 and the first bush portion protrusion for fitting 610 which fit the pair of first tip end portion fitting hole 247 and the first tip end portion fitting hole 248 (refer to FIG. 8), respectively, of the first cylindrical body 201 to be described later, and for being fixed to the first cylindrical body 201. The pair of first bush portion protrusion for fitting 609 and the first bush portion protrusion for fitting 610 are arranged at the both side portions in the flexible direction FD (the both end portions in the direction orthogonal to the flexible direction FD).

As shown in FIG. 8, the pair of first bush portion protrusion for fitting 609 and the first bush portion protrusion for fitting 610 fit with the pair of first tip end portion fitting hole 247 and the first tip end portion fitting hole 248, respectively, whereby the first bush member 601 is fixed to the first cylindrical body 201.

Further, the first bush member 601 is arranged at the first tip end portion 211 of the first cylindrical body 201, on the inner side of the first cylindrical body 201, and configures the first inner surface 245 of the first cylindrical body 201.

Further, as shown in FIG. 8, when the first cylindrical body 201 and the second cylindrical body 203 move relatively away from each other, the pair of second cylindrical portion second engagement part 329 (the protrusion for engagement 331) and the second cylindrical portion second engagement part 330 (the protrusion for engagement 332) of the second engagement member 227, and the pair of first bush member first engagement portion 603 (the first bush member hollow for engagement 605) and the first bush member first engagement portion 604 (the first bush member hollow for engagement 606) of the first bush member 601 move closer to each other, and eventually, the protrusion for engagement 331 and the first bush member hollow for engagement 605 are engaged, and the protrusion for engagement 332 and the first bush member hollow for engagement 606 are engaged. Accordingly, the first cylindrical body 201 and the second cylindrical body 203 are locked in the extension state.

Further, on the outer side of the first bush member first engagement portion 603 and the first bush member first engagement portion 604, the first bush member void portion 607 and the first bush member void portion 608 are arranged, respectively, in between the first cylindrical body 201, whereby the first bush member first engagement portion 603 and the first bush member first engagement portion 604 can deform elastically toward the outer side. Accordingly, in the state other than the extension state, it is not necessary for the first bush member first engagement portion 603 and the first bush member first engagement portion 604 to keep being bent, whereby it is difficult for the flexibility of the first bush member first engagement portion 603 and the first bush member first engagement portion 604 to be lowered over time, and it is difficult for the lock mechanism at extension to be deteriorated over time.

Incidentally, the protrusion for engagement 331 of the second cylindrical portion second engagement part 329 includes the base end side wall portion 333 which is arranged on the base end 15 (the first base end portion 209) side, and the tip end side wall portion 335 which is arranged on the tip end 13 (the first tip end portion 211) side. Each of the base end side wall portion 333 and the tip end side wall portion 335 stands up toward the direction which crosses with the first arm portion axis line AL₁ (the second cylindrical portion axis line AL₃), to be specific, toward the direction substantially orthogonal to the same. Accordingly, it is difficult for the engaged second cylindrical portion second engagement part 329 (the protrusion for engagement 331) and the first bush member first engagement portion 603 (the first bush member hollow for engagement 605) to be disengaged by the force, etc., which is applied unexpectedly to the first arm portion 5.

Further, in the same manner as the protrusion for engagement 331, the protrusion for engagement 332 of the second cylindrical portion second engagement part 330 includes the base end side wall portion (which is not shown) which is arranged on the base end 15 (the first base end portion 209) side, and the tip end side wall portion (which is not shown) which is arranged on the tip end 13 (the first tip end portion 211) side. The actions of the base end side wall portion (which is not shown) and the tip end side wall portion (which is not shown) are the same as those of the base end side wall portion 333 and the tip end side wall portion 335, respectively, and thus the explanation thereof is omitted.

In the short diameter direction (the Y direction), the distance D₁ between the pair of first bush member first engagement portion 603 and the first bush member first engagement portion 604 (the distance between the first inner surface 245) is shorter than the distance D₂ between the pair of second cylindrical portion second engagement part 329 and the second cylindrical portion second engagement part 330 (the distance between the second cylindrical portion outer surface 304). Accordingly, in the first arm portion 5 at the extension state, it is difficult for the engaged first bush member hollow for engagement 605 and the protrusion for engagement 331, and for the engaged first bush member hollow for engagement 606 and the protrusion for engagement 332, to be disengaged by the force, etc., which is applied unexpectedly to the first arm portion 5.

Further, in the short diameter direction (the Y direction), the distance D₂ between the pair of second cylindrical portion second engagement part 329 and the second cylindrical portion second engagement part 330 (the distance between the second cylindrical portion outer surface 304) is shorter than the distance D₃ between the first inner surface 245 in the region in which the first bush member 601 is not present. Accordingly, in a case in which the arm portion 5 is in a state other than the extension state, (for example, in the shrinkage state), it is not necessary for each of the pair of second cylindrical portion second engagement part 329 and the second cylindrical portion second engagement part 330 to deform elastically to the inner side, or each of the same is to deform weakly to the inner side, whereby it is difficult for the flexibility of the pair of second cylindrical portion second engagement part 329 and the second cylindrical portion second engagement part 330 to be lowered over time.

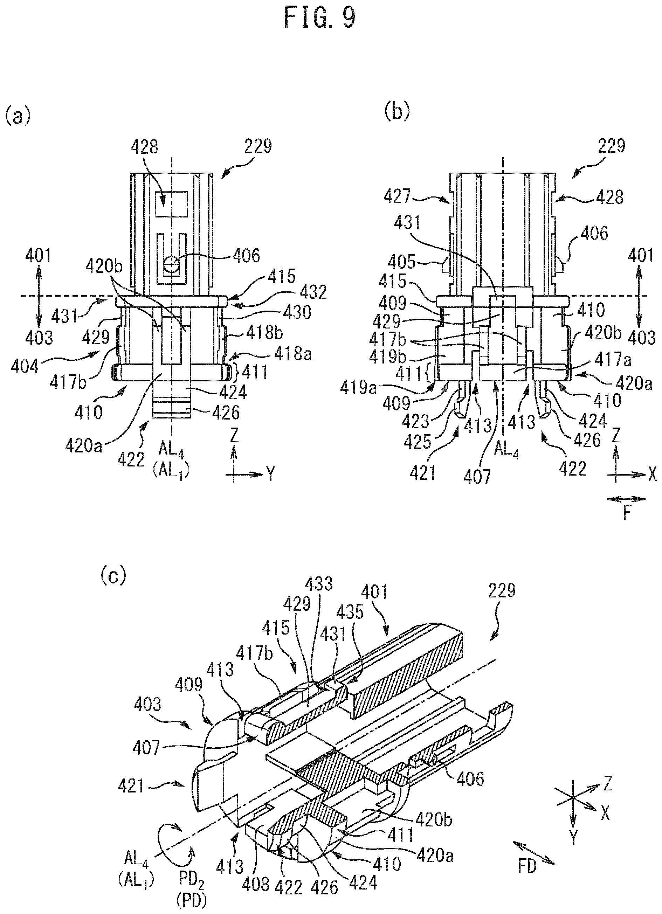

FIG. 9 is a view for explaining the third engagement member 229. To be specific, FIG. 9(a) is the front surface view of the third engagement member 229, FIG. 9(b) is the left side surface view of the third engagement member 229, and FIG. 9(c) is the perspective view of the third engagement member 229.

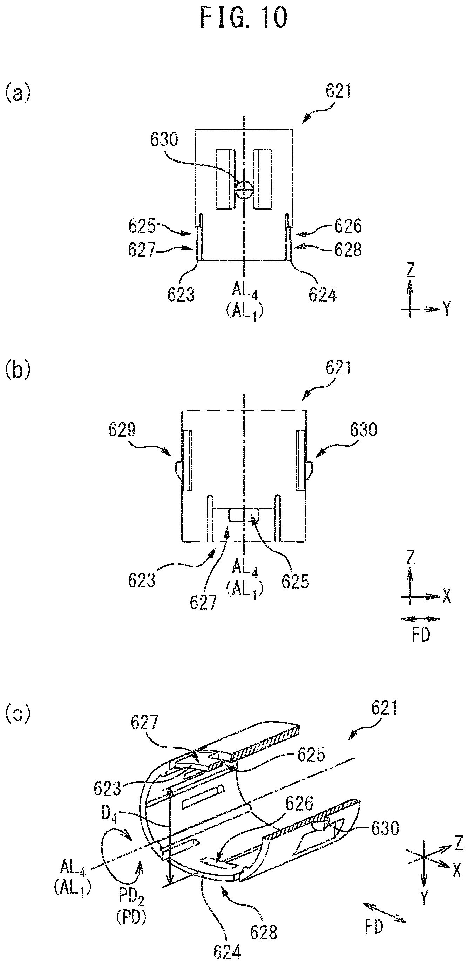

FIG. 10 is a view for explaining the second bush member 621. To be specific, FIG. 10(a) is the front surface view of the second bush member 621, FIG. 10(b) is the left side surface view of the second bush member 621, and FIG. 10(c) is the perspective view of the second bush member 621.

The third engagement member 229 includes the third connection portion 401 as the connection portion which is connected to the third cylindrical body 205 at the third base end portion 217, the third cylindrical portion 403 as the cylindrical portion which is arranged inside the second cylindrical body hollow portion 204, and the pair of third cylindrical portion second engagement part 429 and the third cylindrical portion second engagement part 430 which are arranged on the third cylindrical portion outer surface 404 of the third cylindrical portion 403.

The third connection portion 401 has an outer surface cross sectional shape along the inner surface cross sectional shape of the third cylindrical body 205 (the outer surface cross sectional shape of the third cylindrical body hollow portion 206), is inserted into the third cylindrical body hollow portion 206 of the third cylindrical body 205, and is fixed to the third cylindrical body 205.

Further, the pair of third cylindrical portion second engagement part 429 and the third cylindrical portion second engagement part 430 are arranged at the both side portions in the flexible direction FD (the both end portions in the direction orthogonal to the flexible direction FD). The pair of third cylindrical portion second engagement part 429 and the third cylindrical portion second engagement part 430 include the protrusion for engagement 431 and the protrusion for engagement 432, respectively, which protrude toward the outer side. The pair of the protrusion for engagement 431 and the protrusion for engagement 432 are configured so as to be engaged with the pair of second bush member hollow for engagement 625 and the second bush member hollow for engagement 626, respectively, of the second bush member 621 to be described later.

The third cylindrical portion 403 extends along the first arm portion axis line AL₁ from the third base end portion 217 of the third cylindrical body 205 to the outer side in the opposite direction of the third cylindrical body 205, and is configured so as to be capable of sliding on the inner surface of the second cylindrical body 203 in conjunction with the movement of the third cylindrical body 205. The third cylindrical portion 403 is arranged at the inner portion of the second cylindrical body 203 (the second cylindrical body hollow portion 204) in the both of the shrinkage state and the extension state of the first arm portion 5.

The third cylindrical portion 403 includes the third cylindrical portion axis line AL₄ which is the axis line of the third cylindrical portion 403, and the third circumferential direction PD₂ which is the circumferential direction of the third cylindrical portion axis line AL₄. Incidentally, in a state in which the third engagement member 229 is housed in the first arm portion 5, the third cylindrical portion axis line AL₄ is present on the same straight line as the first arm portion axis line AL₁, and the third circumferential direction PD₂ is the same as the circumferential direction PD of the first arm portion 5. Accordingly, in a state in which the third engagement member 229 is housed in the first arm portion 5, the third cylindrical portion axis line AL₄ and the third circumferential direction PD₂ may be read as the first arm portion axis line AL₁ and the circumferential direction PD, respectively.

The third cylindrical body 205 includes the pair of third cylindrical body fitting holes (which are not shown) at the third base end portion 217. The third connection portion 401 includes the pair of third fitting protrusion 405 and the third fitting protrusion 406 which fit with the pair of third cylindrical body fitting holes (which are not shown) of the third cylindrical body 205. The third engagement member 229 makes the third fitting protrusion 405 and the third fitting protrusion 406 fit with the third cylindrical body fitting holes (which are not shown) of the third cylindrical body 205, respectively, whereby is fixed to the third cylindrical body 205.

The third base end portion 217 of the third cylindrical body 205 is adjacent to the third protruded portion for engagement 415 which is arranged at the boundary with the third connection portion 401 of the third cylindrical portion 403, whereby the rattling of the third cylindrical portion 403, and the third engagement member 229 is suppressed.

Further, the third connection portion 401 includes the pair of third hollow portion for fitting 427 and the third hollow portion for fitting 428 for the first arm portion 5, to be specific, the third cylindrical body 205 and the fourth cylindrical body 207, to operate the lock mechanism at shrinkage so as to retain the shrinkage state thereof.

The third cylindrical portion 403 includes the pair of third cylindrical portion second engagement part 429 and the third cylindrical portion second engagement part 430 which engage with the pair of second bush member hollow for engagement 625 and the second bush member hollow for engagement 626, respectively, of the second bush member 621 to be described later. The pair of third cylindrical portion second engagement part 429 and the third cylindrical portion second engagement part 430 are arranged at the both side portions in the flexible direction FD (the both end portions in the direction orthogonal to the flexible direction FD).

The third cylindrical portion 403 includes the pair of third greater flexibility portion 407 and the third greater flexibility portion 408, and the pair of third smaller flexibility portion 409 and the third smaller flexibility portion 410. The pair of third greater flexibility portion 407 and the third greater flexibility portion 408 are arranged at the both side portions in the flexible direction FD (the both end portions in the direction orthogonal to the flexible direction FD), and the pair of third smaller flexibility portion 409 and the third smaller flexibility portion 410 are arranged at the both end portions in the flexible direction FD.

The third cylindrical portion 403 includes the third protruded portion for engagement 415 at the boundary with the third connection portion 401. The third protruded portion for engagement 415 is arranged along the third circumferential direction PD₂ of the third cylindrical portion 403, and protrudes toward the outer side of the third cylindrical portion axis line AL₄. In between the pair of third greater flexibility portion 407 and the third greater flexibility portion 408, and in between the pair of third smaller flexibility portion 409 and the third smaller flexibility portion 410, the third slit portion 413 is arranged.

The third greater flexibility portion 407 and the third greater flexibility portion 408 include the third greater flexibility portion circumferential direction extending portion 417a and the pair of third greater flexibility portion axis line direction extending portions 417b, and the third greater flexibility portion circumferential direction extending portion 418a and the pair of third greater flexibility portion axis line direction extending portions 418b, respectively. Each of the third greater flexibility portion circumferential direction extending portion 417a and the third greater flexibility portion circumferential direction extending portion 418a extends in the third circumferential direction PD₂ and is configured so as to slide on the second inner surface 247. Each of the pair of third greater flexibility portion axis line direction extending portions 417b and the pair of third greater flexibility portion axis line direction extending portions 418b extends in the direction of the third cylindrical portion axis line AL₄ and is configured so as to slide on the second inner surface 247. The third greater flexibility portion circumferential direction extending portion 417a and the pair of third greater flexibility portion axis line direction extending portions 417b, and the third greater flexibility portion circumferential direction extending portion 418a and the pair of third greater flexibility portion axis line direction extending portions 418b protrude toward the outer side of the third cylindrical portion axis line AL₄. The pair of third greater flexibility portion axis line direction extending portions 417b are arranged at the both end portions in the third circumferential direction PD₂ of the third greater flexibility portion 407, and the pair of third greater flexibility portion axis line direction extending portions 418b are arranged at the both end portions in the third circumferential direction PD₂ of the third greater flexibility portion 408.

The third smaller flexibility portion 409 and the third smaller flexibility portion 410 include the third smaller flexibility portion circumferential direction extending portion 419a and the pair of third smaller flexibility portion axis line direction extending portions 419b, and the third smaller flexibility portion circumferential direction extending portion 420a and the pair of third smaller flexibility portion axis line direction extending portions 420b, respectively. Each of the third smaller flexibility portion circumferential direction extending portion 419a and the third smaller flexibility portion circumferential direction extending portion 420a extends in the third circumferential direction PD₂ and is configured so as to slide on the second inner surface 247. Each of the pair of third smaller flexibility portion axis line direction extending portions 419b and the pair of third smaller flexibility portion axis line direction extending portions 420b extends in the direction of the third cylindrical portion axis line AL₄ and is configured so as to slide on the second inner surface 247. The third smaller flexibility portion circumferential direction extending portion 419a and the pair of third smaller flexibility portion axis line direction extending portions 419b, and the third smaller flexibility portion circumferential direction extending portion 420a and the pair of third smaller flexibility portion axis line direction extending portions 420b protrude toward the outer side of the third cylindrical portion axis line AL₄. The pair of third smaller flexibility portion axis line direction extending portions 419b are arranged with an interval of the predetermined distance in the third circumferential direction PD₂, and the pair of third smaller flexibility portion axis line direction extending portions 420b are arranged with an interval of the predetermined distance in the third circumferential direction PD₂.

Incidentally, the third greater flexibility portion circumferential direction extending portion 417a and the third greater flexibility portion circumferential direction extending portion 418a, and further the third smaller flexibility portion circumferential direction extending portion 419a and the third smaller flexibility portion circumferential direction extending portion 420a form the third circumferential direction extending portion 411 which goes around the third circumferential direction PD₂ with the third slit portions 413 present in between.

The functions of the third circumferential direction extending portion 411, the third greater flexibility portion circumferential direction extending portion 417a, the pair of third greater flexibility portion axis line direction extending portions 417b, the third greater flexibility portion circumferential direction extending portion 418a, the pair of third greater flexibility portion axis line direction extending portions 418b, the third smaller flexibility portion circumferential direction extending portion 419a, the pair of third smaller flexibility portion axis line direction extending portions 419b, the third smaller flexibility portion circumferential direction extending portion 420a, and the pair of third smaller flexibility portion axis line direction extending portions 420b, are the same as those of the second circumferential direction extending portion 311, the second greater flexibility portion circumferential direction extending portion 317a, the pair of second greater flexibility portion axis line direction extending portion 317b, the second greater flexibility portion circumferential direction extending portion 318a, the pair of second greater flexibility portion axis line direction extending portion 318b, the second smaller flexibility portion circumferential direction extending portion 319a, the pair of second smaller flexibility portion axis line direction extending portion 319b, the second smaller flexibility portion circumferential direction extending portion 320a, and the pair of second smaller flexibility portion axis line direction extending portion 320b, and thus the explanation thereof is omitted.

In the first embodiment, the first arm portion 5, to be specific, the second cylindrical body 203 and the third cylindrical body 205, include the lock mechanism at shrinkage so as to retain the shrinkage state thereof.

To be specific, the third engagement member 229 further includes the pair of third protrusion portion for fitting 421 and the third protrusion portion for fitting 422 which are connected to the third cylindrical portion 403, as the second lock portion. The third protrusion portion for fitting 421 includes the third cylindrical portion axis line direction extending portion 423 which has the third smaller flexibility portion 409 as the base point and extends in parallel with the third cylindrical portion axis line AL₄, and the third protruded portion 425 which has the tip end of the third cylindrical portion axis line direction extending portion 423 as the base point, and extends toward the outer side of the third cylindrical portion axis line AL₄.

In the same manner, the third protrusion portion for fitting 422 includes the third cylindrical portion axis line direction extending portion 424 which has the third smaller flexibility portion 410 as the base point and extends in parallel with the third cylindrical portion axis line AL₄, and the third protruded portion 426 which has the tip end of the third cylindrical portion axis line direction extending portion 424 as the base point, and extends toward the outer side of the third cylindrical portion axis line AL₄.

The pair of third protrusion portion for fitting 421 and the third protrusion portion for fitting 422 configures the lock mechanism at shrinkage with the pair of second hollow portion for fitting 327 and the second hollow portion for fitting 328 of the second connection portion 301 of the second engagement member 227. To be specific, the second cylindrical body 203 and the third cylindrical body 205 are made to move relatively closer to each other, whereby the pair of third protrusion portion for fitting 421 and the third protrusion portion for fitting 422, and the pair of second hollow portion for fitting 327 and the second hollow portion for fitting 328 move closer to each other so that they are locked, and the second cylindrical body 203 and the third cylindrical body 205 are made to move relatively away from each other, whereby the pair of third protrusion portion for fitting 421 and the third protrusion portion for fitting 422, and the pair of second hollow portion for fitting 327 and the second hollow portion for fitting 328 move away from each other so as to be unlocked. As a result, the second cylindrical body 203 and the third cylindrical body 205 lock at shrinkage.

The structure of the third engagement member 229 is the same as that of the second engagement member 227, and the actions and effects thereof are also the same, and thus the explanation thereof is omitted.

In the first embodiment, the first arm portion 5, to be specific, the second cylindrical body 203 and the third cylindrical body 205, include the lock mechanism at extension so as to retain the extension state.

As shown in FIG. 10, the second bush member 621 includes the pair of second bush member first engagement portion 623 and the second bush member first engagement portion 624 which are arranged at the both side portions in the flexible direction FD (the both end portions in the direction orthogonal to the flexible direction FD).

The second bush member first engagement portion 623 includes the second bush member hollow for engagement 625 which is configured so as to engage with the third cylindrical portion second engagement part 429 of the third cylindrical portion 403, and at the outer side of the second bush member first engagement portion 623, the second bush member void portion 627 which is formed in between the second cylindrical body 203 is arranged. Accordingly, the second bush member first engagement portion 623 is configured so as to deform elastically toward the outer side. The second bush member hollow for engagement 625 is depressed toward the outer side. To be specific, the second bush member hollow for engagement 625 is a through hole which is penetrated toward the outer side.

In the same manner, the second bush member first engagement portion 624 includes the second bush member hollow for engagement 626 which is configured so as to engage with the third cylindrical portion second engagement part 430 of the third cylindrical portion 403, and at the outer side of the second bush member first engagement portion 624, the second bush member void portion 628 which is formed in between the second cylindrical body 203 is arranged. Accordingly, the second bush member first engagement portion 624 is configured so as to deform elastically toward the outer side. The second bush member hollow for engagement 626 is depressed toward the outer side. To be specific, the second bush member hollow for engagement 626 is a through hole which is penetrated toward the outer side.

In the same manner as the first bush member 601, the second bush member 621 includes the pair of second bush portion protrusion for fitting 629 and the second bush portion protrusion for fitting 630, and the pair of second bush portion protrusion for fitting 629 and the second bush portion protrusion for fitting 630 fit with the pair of second tip end portion fitting holes (which are not shown), respectively, which are arranged at the second base end portion 213 of the second cylindrical body 203, whereby is fixed to the second cylindrical body 203. The pair of second bush portion protrusion for fitting 629 and the second bush portion protrusion for fitting 630 are arranged at the both end portions in the flexible direction FD.

Further, the second bush member 621 is arranged at the second tip end portion 215 of the second cylindrical body 203, on the inner side of the second cylindrical body 203, and configures the second inner surface 247 of the second cylindrical body 203.

When the second cylindrical body 203 and the third cylindrical body 205 move relatively away from each other, the pair of third cylindrical portion second engagement part 429 (the protrusion for engagement 431) and the third cylindrical portion second engagement part 430 (the protrusion for engagement 432) of the third engagement member 229, and the pair of second bush member first engagement portion 623 (the second bush member hollow for engagement 625) and the second bush member first engagement portion 624 (the second bush member hollow for engagement 626) of the second bush member 621 move closer to each other, and eventually, the protrusion for engagement 431 and the second bush member hollow for engagement 625 are engaged, and the protrusion for engagement 432 and the second bush member hollow for engagement 626 are engaged. Accordingly, the second cylindrical body 203 and the third cylindrical body 205 are locked in the extension state.

Incidentally, the protrusion for engagement 431 of the third cylindrical portion second engagement part 429 includes the base end side wall portion 433 which is arranged on the base end 15 (the second base end portion 213) side, and the tip end side wall portion 435 which is arranged on the tip end 13 (the second tip end portion 215) side. Each of the base end side wall portion 433 and the tip end side wall portion 435 stands up toward the direction which crosses with the first arm portion axis line AL₁ (the third cylindrical portion axis line AL₄), to be specific, toward the direction substantially orthogonal to the same. Accordingly, it is difficult for the engaged third cylindrical portion second engagement part 429 (the protrusion for engagement 431) and the second bush member first engagement portion 623 (the second bush member hollow for engagement 625) to be disengaged by the force, etc., which is applied unexpectedly to the first arm portion 5.

Further, in the same manner as the protrusion for engagement 431, the protrusion for engagement 432 of the third cylindrical portion second engagement part 430 includes the base end side wall portion (which is not shown) which is arranged on the base end 15 (the second base end portion 213) side, and the tip end side wall portion (which is not shown) which is arranged on the tip end 13 (the second tip end portion 215) side. The actions of the base end side wall portion (which is not shown) and the tip end side wall portion (which is not shown) are the same as those of the base end side wall portion 433 and the tip end side wall portion 435, respectively, and thus the explanation thereof is omitted.

In the short diameter direction (the Y direction), the distance between the pair of second bush member first engagement portion 623 and the second bush member first engagement portion 624, to be specific, the distance D₄ between the second bush member hollow for engagement 625 and the second bush member hollow for engagement 626 (the distance between the second inner surface 247) is shorter than the distance between the pair of third cylindrical portion second engagement part 429 and the third cylindrical portion second engagement part 430, to be specific, the distance D₅ between the protrusion for engagement 431 and the protrusion for engagement 432 (the distance between the third cylindrical portion outer surface 404). Accordingly, in the first arm portion 5 at the extension state, it is difficult for the engaged second bush member hollow for engagement 625 and the protrusion for engagement 431, and for the engaged second bush member hollow for engagement 626 and the protrusion for engagement 432, to be disengaged by the force, etc., which is applied unexpectedly to the first arm portion 5.

Further, in the short diameter direction (the Y direction), the distance between the pair of second cylindrical portion second engagement part 329 and the second cylindrical portion second engagement part 330, to be specific, the distance D₂ between the protrusion for engagement 331 and the protrusion for engagement 332 (the distance between the second cylindrical portion outer surface 304) is shorter than the distance D₃ between the first inner surface 245 in the region in which the first bush member 601 is not present. Accordingly, in a case in which the arm portion 5 is in a state other than the extension state, (for example, in the shrinkage state), it is not necessary for each of the pair of second cylindrical portion second engagement part 329 and the second cylindrical portion second engagement part 330 to deform elastically to the inner side, whereby it is difficult for the flexibility of the pair of second cylindrical portion second engagement part 329 and the second cylindrical portion second engagement part 330 to be lowered over time.

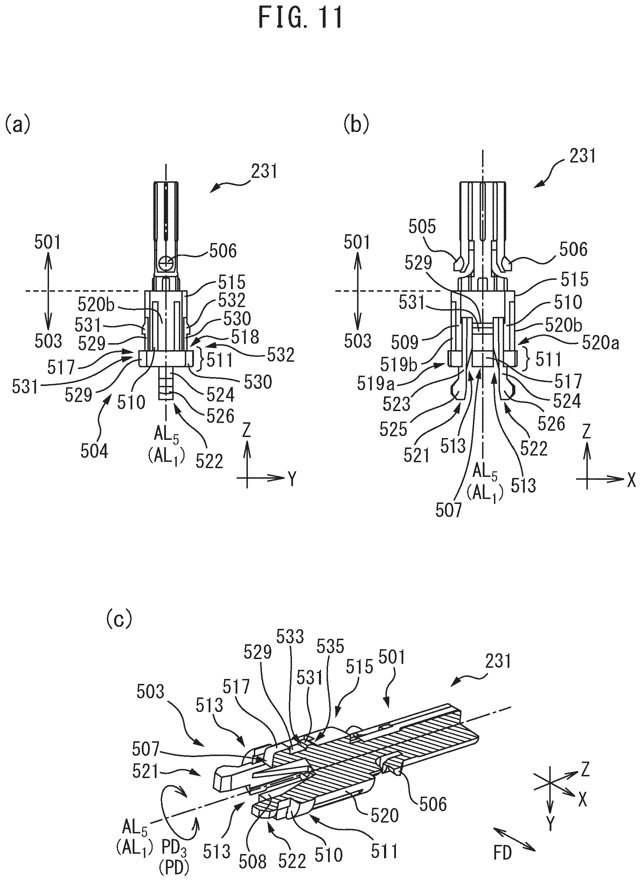

FIG. 11 is a view for explaining the fourth engagement member 231. To be specific, FIG. 11(a) is the front surface view of the fourth engagement member 231, FIG. 11(b) is the left side surface view of the fourth engagement member 231, and FIG. 11(c) is the perspective view of the fourth engagement member 231.

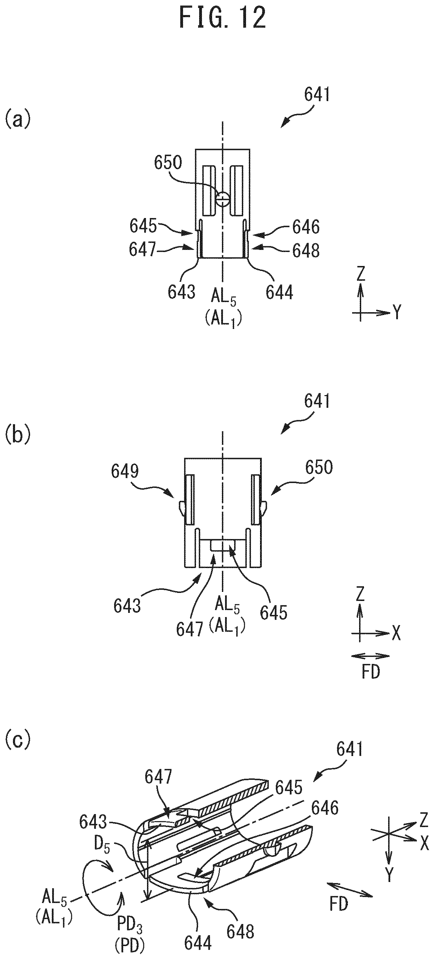

FIG. 12 is a view for explaining the third bush member 641. To be specific, FIG. 12(a) is the front surface view of the third bush member 641, FIG. 12(b) is the left side surface view of the third bush member 641, and FIG. 12(c) is the perspective view of the third bush member 641.

The fourth engagement member 231 includes the fourth connection portion 501 as the connection portion which is connected to the fourth cylindrical body 207 at the fourth base end portion 221, the fourth cylindrical portion 503 as the cylindrical portion which is arranged inside the third cylindrical body hollow portion 206, and the pair of fourth cylindrical portion second engagement part 529 and the fourth cylindrical portion second engagement part 530 which are arranged on the fourth cylindrical portion outer surface 504 of the fourth cylindrical portion 503.

The fourth connection portion 501 has an outer surface cross sectional shape along the inner surface cross sectional shape of the fourth cylindrical body 207 (the outer surface cross sectional shape of fourth cylindrical body hollow portion 208), is inserted into the fourth cylindrical body hollow portion 208 of the fourth cylindrical body 207, and is fixed to the fourth cylindrical body 207.

Further, the pair of fourth cylindrical portion second engagement part 529 and the fourth cylindrical portion second engagement part 530 are arranged at the both side portions in the flexible direction FD (the both end portions in the direction orthogonal to the flexible direction FD). The pair of fourth cylindrical portion second engagement part 529 and the fourth cylindrical portion second engagement part 530 include the protrusion for engagement 531 and the protrusion for engagement 532, respectively, which protrude toward the outer side. The pair of the protrusion for engagement 531 and the protrusion for engagement 532 are configured so as to be engaged with the pair of third bush member hollow for engagement 645 and third bush member hollow for engagement 646, respectively, of the third bush member 641 to be described later.

The fourth cylindrical portion 503 includes the fourth cylindrical portion axis line AL₅ which is the axis line of the fourth cylindrical portion 503, and the fourth circumferential direction PD₃ which is the circumferential direction of the fourth cylindrical portion axis line AL₅. Incidentally, in a state in which the fourth engagement member 231 is housed in the first arm portion 5, the fourth cylindrical portion axis line AL₅ is present on the same straight line as the first arm portion axis line AL₁, and the fourth circumferential direction PD₃ is the same as the circumferential direction PD of the first arm portion 5. Accordingly, in a state in which the fourth engagement member 231 is housed in the first arm portion 5, the fourth cylindrical portion axis line AL₅ and the fourth circumferential direction PD₃ may be read as the first arm portion axis line AL₁ and the circumferential direction PD, respectively.

The fourth connection portion 501 includes the pair of fourth fitting protrusion 505 and the fourth fitting protrusion 506. The fourth connection portion 501 has the same structure as the third connection portion 401 except for not including the structures which correspond to the third hollow portion for fitting 427 and the third hollow portion for fitting 428, and thus the explanation thereof is omitted.

The fourth cylindrical portion 503 includes the pair of fourth cylindrical portion second engagement part 529 and the fourth cylindrical portion second engagement part 530 which engage with the pair of third bush member hollow for engagement 645 and the third bush member hollow for engagement 646, respectively, of the third bush member 641 to be described later. The pair of fourth cylindrical portion second engagement part 529 and the fourth cylindrical portion second engagement part 530 are arranged at the both side portions in the flexible direction FD (the both end portions in the direction orthogonal to the flexible direction FD).

Further, the fourth cylindrical portion 503 includes the pair of fourth greater flexibility portion 507 and the fourth greater flexibility portion 508, the pair of fourth smaller flexibility portion 509 and the fourth smaller flexibility portion 510, the fourth circumferential direction extending portion 511, the fourth slit portion 513, the fourth protruded portion for engagement 515, the fourth greater flexibility portion circumferential direction extending portion 517, the fourth greater flexibility portion circumferential direction extending portion 518, the fourth smaller flexibility portion circumferential direction extending portion 519a, the fourth smaller flexibility portion axis line direction extending portion 519b, the fourth smaller flexibility portion circumferential direction extending portion 520a, the fourth smaller flexibility portion axis line direction extending portion 520b, the fourth protrusion portion for fitting 521, the fourth protrusion portion for fitting 522, the fourth cylindrical portion axis line direction extending portion 523, the fourth cylindrical portion axis line direction extending portion 524, the fourth protruded portion 525, and the fourth protruded portion 526.

In the first embodiment, the first arm portion 5, to be specific, the third cylindrical body 205 and the fourth cylindrical body 207, include the lock mechanism at extension so as to retain the extension state.

As shown in FIG. 12, the third bush member 641 includes the pair of third bush member first engagement portion 643 and the third bush member first engagement portion 644 which are arranged at the both side portions in the flexible direction FD (the both end portions in the direction orthogonal to the flexible direction FD).

The third bush member first engagement portion 643 includes the third bush member hollow for engagement 645 which is configured so as to engage with the fourth cylindrical portion second engagement part 529 of the fourth cylindrical portion 503, and at the outer side of the third bush member first engagement portion643, the third bush member void portion 647 which is formed in between the third cylindrical body 205 is arranged. Accordingly, the third bush member first engagement portion 643 is configured so as to deform elastically toward the outer side. The third bush member hollow for engagement 645 is depressed toward the outer side. To be specific, the third bush member hollow for engagement 645 is a through hole which is penetrated toward the outer side.

In the same manner, the third bush member first engagement portion 644 includes the third bush member hollow for engagement 646 which is configured so as to engage with the fourth cylindrical portion second engagement part 530 of the fourth cylindrical portion 503, and at the outer side of the third bush member first engagement portion 644, the third bush member void portion 648 which is formed in between the third cylindrical body 205 is arranged. Accordingly, the third bush member first engagement portion 644 is configured so as to deform elastically toward the outer side. The third bush member hollow for engagement 646 is depressed toward the outer side. To be specific, the third bush member hollow for engagement 646 is a through hole which is penetrated toward the outer side.

In the same manner as the first bush member 601, the third bush member 641 includes the pair of third bush portion protrusion for fitting 649 and the third bush portion protrusion for fitting 650, and the pair of third bush portion protrusion for fitting 649 and the third bush portion protrusion for fitting 650 fit with the pair of third tip end portion fitting holes (which are not shown), respectively, which are arranged at the third base end portion 217 of the third cylindrical body 205, whereby is fixed to the third cylindrical body 205. The pair of third bush portion protrusion for fitting 649 and the third bush portion protrusion for fitting 650 are arranged at the both end portions in the flexible direction FD.

Further, the third bush member 641 is arranged at the third tip end portion 219 of the third cylindrical body 205, on the inner side of the third cylindrical body 205, and configures the third inner surface 269 of the third cylindrical body 205.

When the third cylindrical body 205 and the fourth cylindrical body 207 move relatively away from each other, the pair of fourth cylindrical portion second engagement part 529 (the protrusion for engagement 531) and the fourth cylindrical portion second engagement part 530 (the protrusion for engagement 532) of the fourth engagement member 231, and the pair of third bush member first engagement portion 643 (the third bush member hollow for engagement 645) and the third bush member first engagement portion 644 (the third bush member hollow for engagement 646) of the third bush member 641 move closer to each other, and eventually, the protrusion for engagement 531 and the third bush member hollow for engagement 645 are engaged, and the protrusion for engagement 532 and the third bush member hollow for engagement 646 are engaged. Accordingly, the third cylindrical body 205 and the fourth cylindrical body 207 are locked in the extension state.

Incidentally, the protrusion for engagement 531 of the fourth cylindrical portion second engagement part 529 includes the base end side wall portion 533 which is arranged on the base end 15 (the third base end portion 217) side, and the tip end side wall portion 535 which is arranged on the tip end 13 (the third tip end portion 219) side. Each of the base end side wall portion 533 and the tip end side wall portion 535 stands up toward the direction which crosses with the first arm portion axis line AL₁ (the fourth cylindrical portion axis line AL₅), to be specific, toward the direction substantially orthogonal to the same. Accordingly, it is difficult for the engaged fourth cylindrical portion second engagement part 529 (the protrusion for engagement 531) and the third bush member first engagement portion 643(the third bush member hollow for engagement 645) to be disengaged by the force, etc., which is applied unexpectedly to the first arm portion 5.

Further, in the same manner as the protrusion for engagement 531, the protrusion for engagement 532 of the fourth cylindrical portion second engagement part 530 includes the base end side wall portion (which is not shown) which is arranged on the base end 15 (the third base end portion 217) side, and the tip end side wall portion (which is not shown) which is arranged on the tip end 13 (the third tip end portion 219) side. The actions of the base end side wall portion (which is not shown) and the tip end side wall portion (which is not shown) are the same as those of the base end side wall portion 533 and the tip end side wall portion 535, respectively, and thus the explanation thereof is omitted.

In the short diameter direction (the Y direction), the distance D₅ between the pair of third bush member first engagement portion 643 and the third bush member first engagement portion 644 (the distance between the third inner surface 269) is shorter than the distance between the pair of the fourth cylindrical portion second engagement part 529 and the fourth cylindrical portion second engagement part 530 (which is not shown, the distance between the fourth cylindrical portion outer surface 504). Accordingly, in the first arm portion 5 at the extension state, it is difficult for the engaged bush member hollow for engagement 645 and the protrusion for engagement 531, and for the engaged third bush member hollow for engagement 646 and the protrusion for engagement 532, to be disengaged by the force, etc., which is applied unexpectedly to the first arm portion 5.

Further, in the short diameter direction (the Y direction), the distance between the pair of the fourth cylindrical portion second engagement part 529 and the fourth cylindrical portion second engagement part 530 (which is not shown, the distance between the fourth cylindrical portion outer surface 504) is shorter than the distance between the third inner surface 269 in the region in which the third bush member 641 is not present (which is not shown). Accordingly, in a case in which the arm portion 5 is in a state other than the extension state, (for example, in the shrinkage state), it is not necessary for each of the pair of fourth cylindrical portion second engagement part 529 and the fourth cylindrical portion second engagement part 530 to deform elastically to the inner side, or each of the same is to deform weakly to the inner side, whereby it is difficult for the flexibility of the pair of fourth cylindrical portion second engagement part 529 and the fourth cylindrical portion second engagement part 530 to be lowered over time.

As described above, each of the second engagement member 227, the third engagement member 229, and the fourth engagement member 231 includes (i) the lock mechanism at shrinkage, (ii) the sliding mechanism, and (iii) the lock mechanism at extension, whereby the first arm portion 5 as a whole has (i) the lock function at shrinkage, (ii) the sliding function, and (iii) the lock function at extension. Accordingly, the first arm portion 5 may be fixed at any length from the shrinkage state to the extension state.

In the first embodiment, the first arm portion 5 includes four cylindrical bodies, however, the total number of the cylindrical bodies of the arm portion of the present disclosure is not particularly limited as long as the arm portion includes at least two cylindrical bodies (the first cylindrical body and the second cylindrical body), and the second cylindrical body is housed in the first cylindrical body, whereby the arm portion is extendable and shrinkable.

When using character expressions, the arm portion of the present disclosure may include n number of extendable and shrinkable cylindrical bodies (wherein n is an integer of 2 or greater). Among the n number of extendable and shrinkable cylindrical bodies, in the order from the most outer side, the cylindrical bodies are referred to as the first cylindrical body, the second cylindrical body, and so on. Incidentally, the upper limit of n is, from the viewpoint as the arm portion for a cleaning tool, preferably, 6, more preferably 4, and even more preferably 4.

Among the n number of cylindrical bodies, the k^{th} cylindrical body is referred to as "the k^{th} cylindrical body". Further, the base end portion of the k^{th} cylindrical body is referred to as "the k^{th} base end portion", the engagement member which is arranged at the k^{th} base end portion is referred to as "the k^{th} engagement member", and the cylindrical portion of the k^{th} engagement member is referred to as "the k^{th} cylindrical portion".

In a case in which the arm portion of the present disclosure includes two cylindrical bodies (n = 2), it is preferable that the first cylindrical body (k = 1) has the lock member which includes the first lock portion at the first base end portion, and the second cylindrical body (k = 2) has the second lock portion at the second engagement member in the second base end portion, and the first lock portion and the second lock portion are locked, whereby the lock function at shrinkage is demonstrated.

In a case in which the arm portion of the present disclosure includes three or more cylindrical bodies (3 ≤ n), it is preferable that the arm portion includes a pair of lock portion in which the k^{th} engagement member which is arranged at the k^{th} base end portion of the k^{th} cylindrical body and the (k + 1)^{th} engagement member which is arranged at the (k + 1)^{th} base end portion of the (k + 1)^{th} cylindrical body can be locked with each other (wherein k is an integer which is 1 or greater and (n - 1) or smaller). This is because the arm portion as a whole can demonstrate the lock function at shrinkage.

Incidentally, the k^{th} engagement member may include both of the lock portion which locks with the (k - 1)^{th} engagement member (or the first lock portion) and the lock portion which locks with the (k + 1)^{th} engagement member.

In the first embodiment, the pair of first hollow portion for fitting 235 and first hollow portion for fitting 236 are shown as the first lock portion, and the pair of second protrusion portion for fitting 321 and the second protrusion portion for fitting 322 are shown as the second lock portion, however, in the arm portion of the present disclosure, the structures of the first lock portion and the second lock portion are not particularly limited as long as they include the lock mechanism at shrinkage in which the first lock portion and the second lock portion are made to move closer to each other so as to be locked, and the same are made to move away from each other so as to be unlocked, and structures known in the technical field may be adopted. The same may be said for the above-mentioned pair of lock portions.

In the arm portion of the present disclosure, it is preferable that one of the first lock portion and the second lock portion is the protrusion portion for fitting, and the other is the hollow portion for fitting. Further, it is preferable that the above-mentioned protrusion portion for fitting and the hollow portion for fitting are configured so that they are made to move closer to each other so as to be locked, and they are made to move away from each other so as to be unlocked. This is from the viewpoint of it being easier for the lock mechanism at shrinkage to operate only by making the arm portion shrink, and for the lock mechanism at shrinkage to be released only by making the arm portion extend, and for the shrinkage state of the arm portion to be easily fixed and released. Also in the above-mentioned pair of lock portions, it is preferable that one is the protrusion portion for fitting and the other is the hollow portion for fitting.

It is preferable that the second lock portion is the protrusion portion for fitting, and the base point of the protrusion portion for fitting is the smaller flexibility portion. This is from the viewpoint of it being difficult for the position of the protrusion portion for fitting to be shifted due to the low flexibility of the smaller flexibility portion, and especially it being difficult to be shifted in the direction closer to or the direction away from the cylindrical portion axis line, and it being easier for the lock function at shrinkage to be demonstrated reliably.

It is preferable that the above-mentioned protrusion portion for fitting is the pair of protrusion portions for fitting, and each of the same includes the extending portion which extends in the direction of the axis line of the arm portion, and the protruded portion which protrudes toward the outer side from the tip end of the extending portion, and the hollow portion for fitting is the pair of hollow portions for fitting, and each of the same includes the recessed portion which is recessed toward the outer side. Further, it is preferable that the protruded portion and the recessed portion are configured so that they are made to move closer to each other so as to be locked, and they are made to move away from each other so as to be unlocked. This is from the viewpoint of the shrinkage state of the arm portion to be easily fixed and released.

The arm portion of the present disclosure may further include the sliding mechanism. Accordingly, the arm portion of the present disclosure can be fixed at any length. As the above-mentioned sliding mechanism, a mechanism which is known in the technical field may be adopted.

When using the above-mentioned character expressions, in a case in which the arm portion of the present disclosure includes two cylindrical bodies (n = 2), it is preferable that the second engagement member which is connected to the second cylindrical body (k = 2) is connected to the second cylindrical body (k = 2), is configured so as to slide along the inner surface of the first cylindrical body (k = 1), and gives the sliding function to the first cylindrical body and the second cylindrical body.

In a case in which the arm portion of the present disclosure includes three or more cylindrical bodies (3 ≤ n), it is preferable that the (k + 1)^{th} cylindrical body includes the (k + 1)^{th} engagement member which slides along the inner surface of the k^{th} cylindrical body (wherein k is an integer which is 1 or greater and (n - 1) or smaller). This is because the arm portion as a whole can demonstrate the sliding function.

In the arm portion of the present disclosure, it is preferable that the (k + 1)^{th} engagement member includes the (k + 1)^{th} cylindrical portion along the inner surface of the k^{th} cylindrical body which includes the (k + 1)^{th} cylindrical portion axis line and the (k + 1)^{th} circumferential direction, and is preferable that the (k + 1)^{th} cylindrical portion includes the pair of (k + 1)^{th} greater flexibility portions in which it is easier to deform elastically to the inner side, and the pair of (k + 1)^{th} smaller flexibility portions in which it is more difficult to deform elastically to the inner side than the pair of (k + 1)^{th} greater flexibility portions.

It is preferable that the (k + 1)^{th} cylindrical portion includes, in between each of the pair of (k + 1)^{th} greater flexibility portions and each of the pair of (k + 1)^{th} smaller flexibility portions, four (k + 1)^{th} slit portions in total with a predetermined width. This is because it is easier for each of the pair of (k + 1)^{th} greater flexibility portions and each of the pair of (k + 1)^{th} smaller flexibility portions to demonstrate the functions thereof independently. Further, this is also because it is easier for the cylindrical portion to change the shape of the cross sectional surface in the direction orthogonal to the axis line of the arm portion.

Incidentally, in another embodiment of the present disclosure, the (k + 1)^{th} cylindrical portion may include a thin portion in thickness of the material which configures the (k + 1)^{th} cylindrical portion, rubber, etc., in stead of the four (k + 1)^{th} slit portions in total, in between each of the pair of (k + 1)^{th} greater flexibility portions and each of the pair of (k + 1)^{th} smaller flexibility portions.

Further, from the viewpoint of manufacturing, there may be cases in which the outer surface cross sectional shape and/or the inner surface cross sectional shape of the (k + 1)^{th} cylindrical body changes along the (k + 1)^{th} cylindrical body axis line direction, for example, there may be cases in which in the first cylindrical body, the inner surface cross sectional shape thereof is gradually made to be smaller from the first base end portion toward the first tip end portion (the first cylindrical body may be tapered). The (k + 1)^{th} cylindrical portion of the (k + 1)^{th} engagement member includes the (k + 1)^{th} slit portions, whereby the (k + 1)^{th} cylindrical portion can change the cross sectional shape in the direction orthogonal to the (k + 1)^{th} cylindrical portion axis line, whereby even in a case in which the (k + 1)^{th} cylindrical body is tapered, the (k + 1)^{th} engagement member can demonstrate the sliding function.

Further, although the direction in which the (k + 1)^{th} slit portions extend is not particularly limited, from the viewpoint of the (k + 1)^{th} cylindrical portion changing the cross sectional shape in the direction orthogonal to the (k + 1)^{th} cylindrical portion axis line, it is preferable that the same extends in the direction of the (k + 1)^{th} cylindrical portion axis line.

It is preferable that the pair of (k + 1)^{th} greater flexibility portions are arranged at both side portions in the flexible direction of the cleaning body attachment portion (the both end portions in the direction orthogonal to the flexible direction), and is preferable that the pair of (k + 1)^{th} smaller flexibility portions are arranged at both end portions in the flexible direction of the cleaning body attachment portion.

The cross sectional shape (the inner surface cross sectional shape, and the outer surface cross sectional shape) of the (k + 1)^{th} cylindrical body in the direction orthogonal to the direction of the arm portion axis line is arbitrary, and for example, a circle, an oval shape which has a long diameter and a short diameter, etc., may be mentioned.

In a case in which the above-mentioned cross sectional shape of the (k + 1)^{th} cylindrical body is an oval shape, it is preferable that the (k + 1)^{th} greater flexibility portions are arranged at both ends in the direction of the short diameter of the (k + 1)^{th} cylindrical body, and the (k + 1)^{th} smaller flexibility portions are arranged at both ends in the direction of the long diameter of the (k + 1)^{th} cylindrical body. This is because it becomes more difficult for the (k + 1)^{th} cylindrical body to rattle with respect to the k^{th} cylindrical body, and to rotate in the k^{th} circumferential direction. Further, this is also because, since it is more likely that the (k + 1)^{th} greater flexibility portions can come into contact with the inner surface of the (k + 1)^{th} cylindrical body in a circumstance that is close to a planer surface, than the (k + 1)^{th} smaller flexibility portions, it is easier for the (k + 1)^{th} greater flexibility portions to demonstrate the sliding function.

It is preferable that each of the pair of (k + 1)^{th} smaller flexibility portions includes one of the (k + 1)^{th} smaller flexibility portion circumferential direction extending portion which extends in the (k + 1)^{th} circumferential direction and is configured so as to slide on the inner surface of the (k + 1)^{th} cylindrical body, and the (k + 1)^{th} smaller flexibility portion axis line direction extending portion which extends in the direction of the (k + 1)^{th} cylindrical body axis line and is configured so as to slide on the inner surface of the (k + 1)^{th} cylindrical body, and is more preferable that the same includes the both. This is because the pair of (k + 1)^{th} smaller flexibility portions, and the engagement member can demonstrate the sliding function in a greater degree.

It is preferable that each of the pair of (k + 1)^{th} greater flexibility portions includes one of the (k + 1)^{th} greater flexibility portion circumferential direction extending portion which extends in the (k + 1)^{th} circumferential direction and is configured so as to slide on the inner surface of the k^{th} cylindrical body, and the (k + 1)^{th} greater flexibility portion axis line direction extending portion which extends in the direction of the (k + 1)^{th} cylindrical body axis line and is configured so as to slide on the inner surface of the k^{th} cylindrical body, and is more preferable that the same includes the both. This is because the pair of (k + 1)^{th} greater flexibility portions, and the engagement member can demonstrate the sliding function in a greater degree.

The arm portion of the present disclosure includes the lock mechanism at extension which retains the extension state. In a case in which the cleaning tool is used in an extended state, the above-mentioned arm portion can suppress the arm portion from shrinking unintentionally by the cleaning body of the cleaning tool bumping into the wall, etc.

In the arm portion of the present disclosure, the first engagement portion which the first cylindrical body includes is not particularly limited as long as the same is configured so as to deform elastically toward the outer side, and for example, the first cylindrical body itself may include the first engagement portion, and for example, the first cylindrical body itself may include the first engagement portion, such as the hollow for engagement which is depressed toward the outer side or the protrusion for engagement which is protruded toward the outer side.

Further, in the arm portion of the present disclosure, the first cylindrical body further includes the bush member which configures the inner surface of the first cylindrical body at the first tip end portion and on the inner side of the first cylindrical body, and the bush member may include the first engagement portion, and the void portion which is arranged on the outer side of the first engagement portion. Accordingly, the first engagement portion is no longer exposed to the outer surface of the arm portion, and it is difficult for the user to feel discomfort when holding the arm portion, and the arm portion has excellent aesthetics.

Further, in the arm portion of the present disclosure, the first cylindrical body may further include the bush member at the first tip end portion and on the outer side of the first cylindrical body, and the first cylindrical body itself may include the first engagement portion.

In the arm portion of the present disclosure, the engagement member is not particularly limited as long as the same includes the connection portion, the cylindrical portion, and the second engagement portion.

In the arm portion of the present disclosure, the first engagement portion which the first cylindrical body includes and the second engagement portion which the engagement member of the second cylindrical body includes are not particularly limited as long as they are engaged with each other by the first engagement portion being bent toward the outer side. As the combination of the first engagement portion and the second engagement portion, for example, the combination of the hollow for engagement which is depressed toward the outer side and the protrusion for engagement which is protruded toward the outer side, the combination of the protrusion for engagement which is protruded toward the inner side and the hollow for engagement which is depressed toward the toward the inner side, etc., may be mentioned. Incidentally, the hollow for engagement may be the one with a bottom portion, that is, a recessed portion, or may be the one without a bottom portion, that is, a through hole.

Further, it is preferable that the second engagement portion which the engagement member of the second cylindrical body includes can deform elastically to the inner side. This is because, for example, in a case in which the second engagement portion is the protrusion for engagement, it is difficult to damage the inner surface of the first cylindrical body.

In the arm portion of the present disclosure, it is preferable that the first engagement portion which the first cylindrical body includes and the second engagement portion which the engagement member of the second cylindrical body includes is the hollow for engagement which is depressed toward the outer side, and the protrusion for engagement which is protruded toward the outer side, respectively. Accordingly, it is difficult for a contact mark which is caused by the first engagement portion to be left at the outer surface of the second cylindrical body.

In the embodiment in which the arm portion of the present disclosure incudes the above-mentioned protrusion for engagement, it is preferable that the above-mentioned protrusion for engagement includes the base end side wall portion which is arranged on the base end side. Further, in the embodiment in which the arm portion of the present disclosure incudes the above-mentioned protrusion for engagement, it is preferable that the above-mentioned protrusion for engagement includes the tip end side wall portion which is arranged on the tip end side. Accordingly, it is difficult for the engaged first engagement portion and second engagement portion to be disengaged by a force, etc., which is applied to the arm portion unexpectedly.

The base end side wall portion inclination angle which is the angle of the above-mentioned base end side wall portion with respect to the axis line of the arm portion (the inclination angle which the protrusion for engagement configures) is preferably 30 ° or more, more preferably 45 ° or more, even more preferably 60 ° or more, and still more preferably 70 ° or more. Further, it is preferable that the above-mentioned base end side wall portion inclination angle is 90 ° (which is vertical with respect to the axis line of the arm portion) or less. This is from the viewpoint of making it possible for the first engagement portion and the second engagement portion to be engaged smoothly when transforming the cleaning tool from the stored state (the shrinkage state) to the cleaning state (the extension state), and making it difficult for the engaged first engagement portion and second engagement portion to be disengaged by a force, etc., which is applied to the arm portion unexpectedly.

The tip end side wall portion inclination angle which is the angle of the above-mentioned tip end side wall portion with respect to the axis line of the arm portion (the inclination angle which the protrusion for engagement configures) is preferably 30 ° or more, more preferably 45 ° or more, even more preferably 60 ° or more, and still more preferably 70 ° or more. Further, it is preferable that the above-mentioned tip end side wall portion inclination angle is 90 ° (which is vertical with respect to the axis line of the arm portion) or less. This is from the viewpoint of while making it difficult for the engaged first engagement portion and second engagement portion to be disengaged by a force, etc., which is applied to the arm portion unexpectedly, making it easier for the engaged first engagement portion and second engagement portion to be disengaged when the usage of the cleaning tool which includes the arm portion is finished and the cleaning tool is transformed to the stored state.

In the arm portion of the present disclosure, it is preferable that the first cylindrical body includes the cross sectional shape of the inner surface that has a long diameter that extends in the flexible direction and a short diameter that extends in the direction crossing with the flexible direction, and that the first engagement portion and the second engagement portion are the pair of first engagement portions and the pair of second engagement portions, respectively, which are arranged at both end portions in the direction of the above-mentioned short diameter. Accordingly, even in a case in which the arm portion is bent in the flexible direction of the cleaning body attachment portion, it is easier to demonstrate the lock function at extension.

In the direction of the above-mentioned short diameter, it is preferable that the distance between the pair of first engagement portions is shorter than the distance between the pair of second engagement portions. Accordingly, it difficult for the engaged first engagement portion and second engagement portion to be disengaged by a force, etc., which is applied to the arm portion unexpectedly

It is preferable that the distance between the above-mentioned pair of first engagement portions is the distance between the inner surface of the first cylindrical body, which is configured by the pair of first engagement portions. Further, the distance between the above-mentioned pair of second engagement portions is the distance between the outer surface of the cylindrical portion of the engagement member in which the pair of second engagement portions are arranged. This is from the viewpoint of the effect of the present disclosure.

Further, it is preferable that the distance between the pair of first engagement portions and the distance between the pair of second engagement portions are those in which the protrusion for engagement is excluded. This is from the viewpoint of the effect of the present disclosure.

Further, in the direction of the above-mentioned short diameter, it is preferable that the distance between the pair of second engagement portions is shorter than the distance between the facing inner surface of the first cylindrical body. Accordingly, in a case in which the above-mentioned arm portion is in a state other than the extension state, for example, in the shrinkage state, it is not necessary for each of the pair of second engagement portions to deform elastically to the inner side, or each of the pair of second engagement portions is to deform weakly to the inner side, whereby it is difficult for the flexibility of the pair of second engagement portions to be lowered over time.

In a case in which the above-mentioned pair of second engagement portions include the protrusion for engagement, the distance between the pair of second engagement portions may be the one in which the protrusion for engagement is excluded, and it is preferable that the same includes the protrusion for engagement. In a case in which the distance between the pair of second engagement portions is the one in which the protrusion for engagement is excluded, in a cleaning tool in the shrinkage state, each of the pair of second engagement portions is to deform elastically to the inner side, or each of the pair of second engagement portions is to deform weakly, and in a case in which the distance between the pair of second engagement portions includes the protrusion for engagement, in a cleaning tool in the shrinkage state, it is not necessary for each of the pair of second engagement portions to deform elastically to the inner side.

Further, in a case in which the first cylindrical body includes the bush member, it is preferable that the distance between the facing inner surface of the first cylindrical body is the distance between the facing inner surface of the first cylindrical body in the region other than the bush member. This is from the viewpoint of the effect of the present disclosure.

In the arm portion of the present disclosure, the material of the lock member may for example be plastic, such as polyacetal based resin, nylon based resin, etc., and it is preferable that the same is plastic. This is from the viewpoint of making it difficult for the arm portion to be worn out.

In the arm portion of the present disclosure, the material of the arm portion may for example be metal, plastic, such as polyacetal based resin, ABS based resin, polyolefin based resin (for example, polypropylene resin, polyethylene resin), polycarbonate based resin, polyester based resin (for example, polyethylene terephthalate based resin, polybutylene terephthalate based resin), acrylic based resin (for example, polymethylmethacrylate based resin, polystyrene based resin), and any combination of the aforementioned.

The material of the arm portion and the material of the lock member may be the same or may be different.

In the first embodiment, the cleaning tool 1 includes the first arm portion 5 which includes the grip portion 3, the second arm portion 9, the rotation portion 7, and the cleaning body attachment portion 11, however, the arm portion of the present disclosure may be used for a cleaning tool which has any structure.

For example, the arm portion of the present disclosure may be used for a cleaning tool which consists of the arm portion of the present disclosure and the cleaning body attachment portion. Further, the arm portion of the present disclosure may be used for a cleaning tool in which the arm portion and the cleaning body attachment portion is connected with the rotation portion arranged in between.

In a case in which the arm portion of the present disclosure is used for a cleaning tool in which the arm portion of the present disclosure, the rotation portion, the second arm portion, and the cleaning body attachment portion are connected in this order, the second arm portion may be unextendable and unshrinkable, or may be extendable and shrinkable. In a case in which the second arm portion is extendable and shrinkable, it is preferable that the same is extendable and shrinkable in the axis line direction of the second arm portion. The structure of the second arm portion is not limited to the one shown in the first embodiment, and a known extendable and shrinkable structure can be adopted.

In a case in which the arm portion of the present disclosure is used for a cleaning tool in which the arm portion of the present disclosure, the rotation portion, the second arm portion if desired, and the cleaning body attachment portion are connected in this order, the above-mentioned rotation portion is not limited to the one shown in the first embodiment, and a known rotation portion structure, for example, the structures described in Patent Literature 1, Japanese Unexamined Patent Publication No. 2004 - 49619, Japanese Unexamined Patent Publication No. 2009 - 17958, and Japanese Unexamined Patent Publication No. 2009 - 34338, can be adopted.

The above-mentioned cleaning body attachment portion is not particularly limited, and may have a known structure, for example, the structures described in the above-mentioned publications.

The above-mentioned cleaning body may be any known cleaning body, for example, that is disposable, that is used repeatedly after cleaning, etc.

### REFERENCE SIGNS LIST

- 1: cleaning tool
- 3: grip portion
- 5: first arm portion
- 7: rotation portion
- 9: second arm portion
- 11: cleaning body attachment portion
- 13: tip end
- 15: base end
- 101: cleaning body
- 225: lock member
- 227: second engagement member
- 229: third engagement member
- 231: fourth engagement member
- 329, 330: second cylindrical portion second engagement part
- 331, 332: protrusion for engagement
- 333: base end side wall portion
- 335: tip end side wall portion
- 429, 430: third cylindrical portion second engagement part
- 431, 432: protrusion for engagement
- 433: base end side wall portion
- 435: tip end side wall portion
- 529, 530: fourth cylindrical portion second engagement part
- 531, 532: protrusion for engagement
- 533: base end side wall portion
- 535: tip end side wall portion
- 601: first bush member
- 603, 604: first bush member first engagement portion
- 605, 606: first bush member hollow for engagement
- 607, 608: first bush member void portion
- 609, 610: first bush portion protrusion for fitting
- 621: second bush member
- 623, 624: second bush member first engagement portion
- 625, 626: second bush member hollow for engagement
- 627, 628: second bush member void portion
- 629, 630: second bush portion protrusion for fitting
- 641: third bush member
- 643, 644: third bush member first engagement portion
- 645, 646: third bush member hollow for engagement
- 647, 648: third bush member void portion
- 649, 650: third bush portion protrusion for fitting
- θ: arm angle
- FD: flexible direction

## Claims

1. An arm portion for a cleaning tool, which includes a cleaning body attachment portion that has a flexible direction, wherein
the arm portion includes an axis line and a circumferential direction, and further includes a base end and a tip end,
the arm portion includes at least a first cylindrical body which has a hollow portion and an inner surface, and a second cylindrical body which is inserted into the hollow portion, and is configured so as to be extendable and shrinkable in a direction of the axis line,
the first cylindrical body includes a first base end portion which is close to the base end and a first tip end portion which is close to the tip end,
the second cylindrical body includes a second base end portion which is close to the base end and a second tip end portion which is close to the tip end,
the first cylindrical body includes a first engagement portion which is configured so as to deform elastically to an outer side at the first tip end portion in the inner surface, and
the second cylindrical body includes an engagement member which has a connection portion that is connected to the second cylindrical body at the second base end portion, a cylindrical portion that is arranged inside the hollow portion and has an outer surface, and a second engagement portion that is arranged in the outer surface, is capable of deforming elastically to an inner side and is configured so as to engage with the first engagement portion.

2. The arm portion according to claim 1, wherein
the first engagement portion includes a hollow for engagement which is depressed toward the outer side, and
the second engagement portion includes a protrusion for engagement which is protruded toward the outer side.

3. The arm portion according to claim 1 or 2, wherein
the protrusion for engagement includes a wall portion which is arranged on a base end side and/or a tip end side.

4. The arm portion according to any one of claims 1 to 3, wherein
the first cylindrical body further includes a bush member which configures the inner surface, at the first tip end portion and on an inner side of the first cylindrical body, and
the bush member includes the first engagement portion and a void portion which is arranged on an outer side of the first engagement portion.

5. The arm portion according to any one of claims 1 to 4, wherein
the first cylindrical body has a cross sectional shape of the inner surface which includes a long diameter that extends in the flexible direction and a short diameter that extends in a direction which crosses the flexible direction, and
the first engagement portion and the second engagement portion are a pair of first engagement portions and a pair of second engagement portions, respectively, each of which being arranged at both end portions in a direction of the short diameter.

6. The arm portion according to claim 5, wherein
in the direction of the short diameter, a distance between the pair of first engagement portions is shorter than a distance between the pair of second engagement portions.

7. The arm portion according to claim 5 or 6, wherein
in the direction of the short diameter, a distance between the pair of second engagement portions is shorter than a distance between the facing inner surface.

8. The arm portion according to any one of claims 5 to 7, wherein
the cylindrical portion includes a pair of smaller flexibility portions which are arranged at both end portions in a direction of the long diameter, and a pair of greater flexibility portions which are arranged at the both end portions in the direction of the short diameter, and
each of the pair of greater flexibility portions includes the second engagement portion.

9. The arm portion according to claim 8, wherein
the cylindrical portion includes a slit portion which extends in the direction of the axis line, between each of the pair of greater flexibility portions, and between each of the pair of smaller flexibility portions.

10. The arm portion according to claim 8 or 9, wherein
each of the pair of greater flexibility portions includes a greater flexibility portion circumferential direction extending portion which extends in the circumferential direction and is configured to slide on the inner surface, and a greater flexibility portion axis line direction extending portion which extends in the direction of the axis line and is configured to slide on the inner surface.

11. The arm portion according to any one of claims 8 to 10, wherein
each of the pair of smaller flexibility portions includes a smaller flexibility portion circumferential direction extending portion which extends in the circumferential direction and is configured to slide on the inner surface of the first cylindrical body, and a smaller flexibility portion axis line direction extending portion which extends in the direction of the axis line and is configured to slide on the inner surface.

12. The arm portion according to any one of claims 8 to 11, wherein
the first cylindrical body further includes a lock member which includes a first lock portion at the first base end portion, that is arranged in the hollow portion and is configured so as not to slide on the inner surface, and
the engagement member further includes a second lock portion which is arranged at the cylindrical portion, locks with the first lock portion, is to be arranged in the hollow portion and is configured so as not to slide on the inner surface.

13. The arm portion according to claim 12, wherein
one of the first lock portion and the second lock portion is a protrusion portion for fitting, and the other is a hollow portion for fitting.

14. The arm portion according to claim 13, wherein
the protrusion portion for fitting is a pair of protrusion portions for fitting, each of which including an extending portion that extends in the direction of the axis line, and a protruded portion that protrudes toward the outer side with a tip end of the extending portion as a base point, and
the hollow portion for fitting is a pair of hollow portions for fitting, each of which including a recessed portion that is recessed toward the outer side.

15. The arm portion according to claim 13 or 14, wherein
the second lock portion is the protrusion portion for fitting, and
the protrusion portion for fitting has one or both of the pair of smaller flexibility portions as a base point.
